(19) **Europäisches Patentamt**

**European Patent Office**

**Office européen des brevets**

(11) **EP 1 659 429 A1**

(12) **EUROPEAN PATENT APPLICATION**
published in accordance with Art. 158(3) EPC

(43) Date of publication:
24.05.2006 Bulletin 2006/21

(51) Int Cl.:
*G02B 6/10* (1985.01)   *G02B 6/24* (1985.01)
*G02B 6/26* (1985.01)

(21) Application number: 04772357.2

(22) Date of filing: 27.08.2004

(86) International application number:
**PCT/JP2004/012401**

(87) International publication number:
**WO 2005/022218 (10.03.2005 Gazette 2005/10)**

(84) Designated Contracting States:
**DE FR GB IT**

(30) Priority: 29.08.2003 JP 2003307560
11.09.2003 JP 2003320127
22.09.2003 JP 2003330499

(71) Applicant: **Sumitomo Electric Industries, Ltd.**
**Osaka-shi, Osaka 541-0041 (JP)**

(72) Inventors:
• **HASHIMOTO, Ken,**
**c/o Yokohama Works**
**Yokohama-shi,**
**Kanagawa 244-8588 (JP)**
• **OHMURA, Masaki,**
**c/o Yokohama Works**
**Yokohama-shi,**
**Kanagawan 244-8588 (JP)**

• **SUNAGA, Kei,**
**c/o Yokohama Works**
**Yokohama-shi,**
**Kanagawa 244-8588 (JP)**
• **ISHIKAWA, Shinji,**
**c/o Yokohama Works**
**Yokohama-shi,**
**Kanagawa 244-8588 (JP)**
• **INOUE, Akira,**
**c/o Yokohama Works**
**Yokohama-shi,**
**Kanagawa 244-8588 (JP)**

(74) Representative: **HOFFMANN EITLE**
**Patent- und Rechtsanwälte**
**Arabellastrasse 4**
**81925 München (DE)**

(54) **OPTICAL PART, OPTICAL PART PRODUCING METHOD AND OPTICAL SYSTEM**

(57)   An optical component as one embodiment of the present invention comprises an optical waveguide. This optical waveguide is a single optical waveguide having a first region and a second region along a longitudinal direction thereof. In this optical waveguide, cross-sectional refractive index profiles vary along the longitudinal direction in the second region.

**Fig.1**

## Description

**Technical Field**

The present invention relates to an optical component of an optical waveguide type, production methods of such an optical component, and an optical system incorporating such an optical components.

**Background Art**

Optical waveguides such as optical fibers are used in a variety of forms according to their applications. In an optical communication system being one of the applications, an optical fiber (optical waveguide) is used as an optical transmission medium. This optical fiber as an optical transmission medium guides light incident at one end thereof and outputs it from the other end. For example, where light emitted from a surface emitting laser source is input at one end of the optical fiber, the mode field diameter at the one end of optical fiber is preferably as large as possible, in view of optical coupling efficiency thereof. Where the light outputted from the other end of optical fiber is input into another optical device, the mode field diameter at the other end of optical fiber is also preferably as large as possible in certain cases.

For example, Patent Document 1 (Japanese Patent Application Laid-Open No. 8-43650) discloses an optical fiber in which the mode field diameter is increased in a partial range along the longitudinal direction, and a production method thereof. The optical fiber disclosed in this Document is one having a core region and a cladding region consisting primarily of silica glass, wherein the cladding region is doped with $GeO_2$ as a photosensitive agent, wherein the $GeO_2$ dopant concentration of the core region is smaller than that of the cladding region, and wherein the partial range along the longitudinal direction is exposed to ultraviolet light to decrease the relative refractive-index difference between the core region and the cladding region, thereby increasing the mode field diameter.

In another optical system such as a laser processing system being another one of the applications, an optical component in which a lens is provided at a distal end of an optical fiber (optical waveguide) is used as an optical transmission medium. For example, Patent Document 2 (Japanese Patent Application Laid-Open No. 11-38262) discloses an optical component wherein an optical fiber having a cross-sectional refractive index profile of the step index type is fusion-spliced to an optical fiber having a cross-sectional refractive index profile of the graded index type and wherein the latter optical fiber with the cross-sectional refractive index profile of the graded index type acts as a graded index lens. This optical component has the graded index lens at the distal end to collimate or condense light having emitted from a light source and having propagated through the optical fiber, and to project the light onto a processing object, thereby processing the processing object. This optical component is also able to guide light input from the outside into the graded index lens at the distal end, through the optical fiber.

In another optical system such as a laser processing system being still another one of the applications, an optical fiber (optical waveguide) is also used as an optical transmission medium. This optical fiber as an optical transmission medium is arranged to accept input light emitted from a light source, at an input end, to guide the light, to output it from an output end, and to collimate or condense the output light by a lens to project the light onto a processing object, thereby processing the processing object (e.g., reference is made to Patent Document 3: Japanese Patent Application Laid-Open No. 2003-46166).

**Disclosure of the Invention**

**Problems to be solved by the invention**

However, the efficiency of input/output of light of the optical fibers described in Patent Documents 1, 2, and 3 is not so high.

An object of the present invention is to provide an optical waveguide type optical component which can output light in a light intensity distribution different from that of incident light and of which efficiency of input/output of light is high, and a method of producing the optical component, and an optical system incorporating the optical component.

**Means for Solving the Problems**

An optical component according to an aspect of the present invention is an optical component comprising a single optical waveguide having a first region and a second region which are arranged in order along a longitudinal direction thereof, wherein, in the second region, cross-sectional refractive index profiles vary along the longitudinal direction. According to the optical component, the single optical waveguide is provided with the first region and the second region in which the cross-sectional refractive index profiles vary. Therefore, there is no spliced portion where loss of light occurs between the first region and the second region. Hence, the optical component can output light in a light intensity distribution different from that of incident light, and the efficiency of input/output of light is high.

In the optical component of the present invention, the optical waveguide may be an optical fiber, and an outside diameter of the first region is equal to an outside diameter of the second region. Namely, in the optical component, since the optical fiber is provided with the first region and the second region, the outside diameter of the first region is equal to the outside diameter of the second region. Therefore, there is no spliced portion between the first region and the second region, and the efficiency of light input/output is high. Also, since the outside diameter of the first region is equal to the outside diameter of the second region in the optical components, the optical component has an advantage of capable of being steadily and easily secured by a V groove or a ferrule.

The optical component of the present invention may have the configuration in which the optical waveguide is provided with a first position and a second position along the longitudinal direction thereof, cross-sectional refractive index profiles vary along the longitudinal direction between the first position and the second position, and at a predetermined wavelength to become a single mode at the first position, an overlap rate between a field distribution of light having propagated from the first position and having arrived at the second position, and a Gaussian distribution is not less than 90%.

The optical component of the present invention may have the configuration in which the optical waveguide is provided with a first position and a second position along the longitudinal direction thereof, cross-sectional refractive index profiles vary along the longitudinal direction between the first position and the second position, and at a predetermined wavelength to become a single mode at the first position, an overlap rate between a field distribution of fundamental-mode light having propagated from the first position and having arrived at the second position, and a Gaussian distribution is not less than 90%.

An optical component according to the present invention is an optical component comprising a single optical waveguide having a first position and a second position along a longitudinal direction thereof, wherein cross-sectional refractive index profiles vary along the longitudinal direction between the first position and the second position, and wherein at a predetermined wavelength to become a single mode at the first position, an overlap rate between a field distribution of light and a field distribution of fundamental-mode light having propagated from the first position and having arrived at the second position is not less than 90%.

In the above-described optical components, the predetermined wavelength is in a single mode at the first position along the longitudinal direction of the optical waveguide and the cross-sectional refractive index profiles vary along the longitudinal direction between the first position and the second position; therefore, the mode field diameters vary along the longitudinal direction. In addition, the overlap rate between the field distribution of the light having propagated from the first position and having arrived at the second position, and the Gaussian distribution, the overlap rate between the field distribution of the fundamental-mode light having propagated from the first position and having arrived at the second position, and the Gaussian distribution, and the overlap rate between the field distribution of the light and the field distribution of the fundamental-mode light having propagated from the first position and having arrived at the second position is not less than 90%, and the optical waveguide is a single optical waveguide without any spliced portion between the first position and the second position; therefore, loss is small between the first position and the second position.

Preferably, ion the optical components of the present invention, at each position along the longitudinal direction between the first position and the second position and at the predetermined wavelength, an overlap rate between a field distribution of light having propagated from the first position and having arrived at the position, and the Gaussian distribution is not less than 90%; or an overlap rate between a field distribution of fundamental-mode light and the Gaussian distribution is not less than 90%. The optical components are also characterized in that at each position along the longitudinal direction between the first position and the second position and at the predetermined wavelength an overlap rate between a field distribution of light having propagated from the first position and having arrived at the position and a field distribution of fundamental-mode light is not less than 90%.

In a preferred configuration of the optical components of the present invention, at the predetermined wavelength a mode field diameter at the second position is not less than 10% different from a mode field diameter at the first position. In another preferred configuration V parameters vary along the longitudinal direction between the first position and the second position, and in still another preferred configuration a V parameter at the second position is not less than 2.4.

In another preferred configuration of the optical components of the present invention, at each position along the longitudinal direction between the first position and the second position and at the predetermined wavelength a change rate of a field distribution of fundamental-mode light is not more than 0.1/mm. In another preferred configuration the variation of the cross-sectional refractive index profiles is continuous along the longitudinal direction between the first position and the second position. In still another preferred configuration the first position is one end of the optical waveguide and the second position is another end of the optical waveguide.

The optical component of the present invention may have the configuration in which a mode field diameter in the second region is larger than a mode field diameter in the first region, and the second region has a cross-sectional refractive index profile capable of substantializing a graded index lens.

In this optical component, the mode field diameter in the second region is larger than the mode field diameter in the first region and the second region has the cross-sectional refractive index profile capable of substantializing a graded index lens; therefore, the light having propagated as confined in the core region of the first region of the optical waveguide is incident into the second region of the optical waveguide, and then it travels with a certain divergence angle immediately after the incidence. However, the converging action in the second region gradually decreases the divergence angle of the light propagating in the second region, so that the light propagating in the second region becomes parallel light before long and then travels as converged thereafter. Since the optical waveguide of this optical component does not have any spliced portion between the first region and the second region, loss is small at the boundary between the first region and the second region.

In a preferred configuration a cross-sectional refractive index profile in the first region is of a step index type, and in another preferred configuration the cross-sectional refractive index profile in the second region is of a graded index type.

When in the optical component of the present invention the second region includes one end of the optical waveguide, the light having propagated from the first region into the second region is outputted from the one end to the outside. This light outputted to the outside is, for example, collimated light or converging light.

In another preferred configuration of the optical component of the present invention, the first region permits transmission in a single mode. In this case, where the first region of the optical component of the present invention is connected to a single-mode optical fiber commonly used as an optical transmission line in an optical communication system, the connection loss is small at the connecting position.

The optical component of the present invention may have the configuration in which the optical waveguide has a first position and a second position along a longitudinal direction thereof, and at a predetermined wavelength to become a single mode at the first position, light propagates in multiple modes at the second position.

In this optical component, the light of the predetermined wavelength propagates in a single mode at the first position along the longitudinal direction of the optical waveguide, and in multiple modes at the second position, and thus intensity distributions of the guided light at the first position and at the second position are different from each other. Since the optical waveguide of this optical component is an optical waveguide without any spliced portion between the first position and the second position, loss is small between the first position and the second position.

In a preferred configuration of the optical component of the present invention, at the predetermined wavelength the number of modes at the second position is not less than 3. In this case, the intensity distribution of guided light at the second position can be one of various shapes.

In a preferred configuration of the optical component of the present invention, a variation of cross-sectional refractive index profiles along the longitudinal direction of the optical waveguide is continuous between the first position and the second position. This configuration is advantageous in reducing the loss between the first position and the second position.

In the optical component of the present invention, where the second position is one end of the optical waveguide, the light having propagated from the first position to the second position is outputted from the one end to the outside. The near field pattern of this light outputted to the outside is coincident with the intensity distribution of the guided light at the second position.

In a preferred configuration, for a light intensity distribution on a plane perpendicular to the optical axis, of light of the predetermined wavelength having propagated through the optical waveguide and then having been outputted from the one end to the outside, where $W_{60}$ designates a width of a range where light intensities are not less than 60% of a peak intensity and $W_{20}$ designates a width of a range where light intensities are not less than 20% of the peak intensity, a ratio of the widths ($W_{20}/W_{60}$) is not more than 1.4.

In a further preferred configuration, for a light intensity distribution on a plane normal to the optical axis, of light of the predetermined wavelength having propagated through the optical waveguide and then having been outputted from the one end to the outside, where $W_{80}$ designates a width of a range where light intensities are not less than 80% of a peak intensity and $W_{20}$ designates a width of a range where light intensities are not less than 20% of the peak intensity, a ratio of the widths ($W_{20}/W_{80}$) is not more than 1.2. In this case, the light outputted from one end of the optical waveguide has a uniform intensity distribution and is advantageous, for example, in irradiating a certain fixed region at uniform intensity.

In another preferred configuration, for a light intensity distribution on any plane normal to the optical axis, of light of the predetermined wavelength having propagated through the optical waveguide and then having been outputted from the one end to the outside, a light intensity is greater in a marginal region than in a central region. In this case, the light outputted from one end of the optical waveguide has the light intensity greater in the marginal region than in the central region and is thus advantageous, for example, in a boring process of a certain shape.

An optical component production method according to another aspect of the present invention comprises (1) preparing a single optical waveguide having a core region and a cladding region, the cladding region having photosensitivity to refractive index change inducing light; (2) exposing a partial region along a longitudinal direction of the optical waveguide to the refractive index change inducing light; and (3) changing cross-sectional refractive index profiles along the longitudinal direction in the exposed region of the refractive index change inducing light in the optical waveguide.

According to this optical component production method, the optical waveguide to be prepared at the beginning has the core region and the cladding region, and the cladding region has photosensitivity to the refractive index change inducing light. The partial region along the longitudinal direction of this optical waveguide is exposed to the refractive index change inducing light, thereby producing the optical component of the optical waveguide type. That is, by setting the non-exposed region of the refractive index change inducing light as the first region and by setting the exposed region of the refractive index change inducing light as the second region, the optical component comprising the optical waveguide, which has the first region and the second region, and does not have a splice portion between the first region and the second region, can be produced.

In the optical component production method of the present invention, the optical waveguide may be an optical fiber. In this case, since the optical component is produced from the single optical fiber, an outside diameter of the first region is equal to an outside diameter of the second region.

The optical component production method may change a mode field diameter at a predetermined position in the exposed region at a predetermined wavelength to become a single mode in a non-exposed region.

In the optical component production method of the present invention, preferably, a change of irradiation quantities of the refractive index change inducing light along the longitudinal direction of the optical waveguide is continuous. In this case, the variation of cross-sectional refractive index profiles along the longitudinal direction of the optical waveguide becomes continuous, which is advantageous in reducing the loss between the first position and the second position.

Here the predetermined position is preferably one end of the optical waveguide, and it is also preferable to produce the optical component in such a manner that the exposed region is an intermediate region along the longitudinal direction of the optical waveguide and that the optical waveguide is cut at the predetermined position.

The optical component production may be characterized in that a cross-sectional refractive index profile capable of substantializing a graded index lens is formed in the exposed region.

Here the cross-sectional refractive index profile of the optical waveguide prepared is preferably of the step index type and the cross-sectional refractive index profile in the exposed region is preferably of the graded index type.

In the optical component production method of the present invention, preferably, the exposed region includes one end of the optical waveguide; and, preferably, the exposed region is an intermediate region along the longitudinal direction of the optical waveguide and the optical component is produced by cutting the optical waveguide at a position within the exposed region.

The optical component production method of the present invention may be characterize by producing the optical component in which light of a predetermined wavelength to become a single mode in a non-exposed region propagates in multiple modes at any position in the exposed region.

In the optical component production method of the present invention, preferably, a change of irradiation quantities of the refractive index change inducing light along the longitudinal direction of the optical waveguide is continuous. In this case, the variation of cross-sectional refractive index profiles along the longitudinal direction of the optical waveguide becomes continuous, which is advantageous in reducing the loss between the first position and the second position.

Here the predetermined position is preferably one end of the optical waveguide; and, preferably, the exposed region is an intermediate region along the longitudinal direction of the optical waveguide and the optical component is produced by cutting the optical waveguide at the predetermined position.

An optical system according to still another aspect of the present invention comprises the optical component according to the present invention as described above.

Another optical system according to still another aspect of the present invention comprises a light source for emitting light; and the optical component according to the present invention as described above, for receiving the light emitted from the light source, at an input end, for guiding the light, and for outputting the light from an output end.

In the optical system of the present invention, the optical component may guide the light from the first region to the second region. In this case, the light emitted from the light source is guided through the optical component, and collimated or converged to be outputted from the optical component to the outside. The optical component may guide the light from the second region to the first region. In this case, the light emitted from the light source can be readily input into the optical component.

In the optical system of the present invention, the optical component may guide the light from the first position to the second position. In this case, the light emitted from the light source is guided through the optical component and thereafter is outputted in a changed intensity distribution from the second position of the optical component to the outside. The optical component may guide the light from the second position to the first position. In this case, the light emitted from the light source can be readily input into the optical component.

**Brief Description of the Drawings**

Fig. 1 is a diagram to illustrate a configuration of an optical component according to an embodiment of the present invention.

Fig. 2 is a graph showing a relation of overlap rate between two field distributions, which are a field distribution of the fundamental mode where the refractive index of a second core region is $n_2$ and a field distribution of the fundamental mode where the refractive index of the second core region is $(n_2+0.005)$, with the refractive index $n_2$.

Fig. 3 is a graph showing a longitudinal distribution of the refractive index $n_2$ of the second core region and a longitudinal distribution of overlap rate (case 1).

Fig. 4 is a graph showing a longitudinal distribution of the refractive index $n_2$ of the second core region and a longitudinal distribution of overlap rate (case 2).

Fig. 5 is a graph showing a relation of change rate of the field distribution of the fundamental-mode light per unit length with the refractive index $n_2$ of the second core region in each of case 1 and case 2.

Fig. 6 is a graph showing a longitudinal distribution of the refractive index $n_2$ of the second core region and a longitudinal distribution of overlap rate (case 1).

Fig. 7 is a graph showing a longitudinal distribution of the refractive index $n_2$ of the second core region and a longitudinal distribution of overlap rate (case 2).

Fig. 8 is an illustration to illustrate an optical component production method according to an embodiment of the present invention.

Fig. 9 is an illustration to illustrate an optical component production method according to an embodiment of the present invention.

Fig. 10 is a configuration diagram of an optical system according to an embodiment of the present invention.

Fig. 11 is a configuration diagram of an optical system according to an embodiment of the present invention.

Fig. 12 is an illustration to illustrate a configuration of an optical component according to an embodiment of the present invention.

Fig. 13 is an illustration to illustrate a first operation example of an optical component according to an embodiment of the present invention.

Fig. 14 is an illustration to illustrate a second operation example of an optical component according to an embodiment of the present invention.

Fig. 15 is an illustration to illustrate a first example of an optical component production method according to an embodiment of the present invention.

Fig. 16 is an illustration to illustrate a second example of an optical component production method according to an embodiment of the present invention.

Fig. 17 is an illustration to illustrate a third example of an optical component production method according to an embodiment of the present invention.

Fig. 18 is an illustration to illustrate a fourth example of an optical component production method according to an embodiment of the present invention.

Fig. 19 is an illustration to illustrate an optical component production method according to an embodiment of the present invention.

Fig. 20 is a configuration diagram of an optical system according to an embodiment of the present invention.

Fig. 21 is an illustration to illustrate a configuration of an optical component according to an embodiment of the present invention.

Fig. 22 is an illustration showing an intensity distribution of light guided through a first region of an optical component according to an embodiment of the present invention.

Fig. 23 is an illustration showing an example of an intensity distribution of light outputted from the second position of an optical component according to an embodiment of the present invention.

Fig. 24 is an illustration showing another example of an intensity distribution of light outputted from the second position of an optical component according to an embodiment of the present invention.

Fig. 25 is an illustration showing an intensity distribution of light guided through the first region of an optical component in an example.

Fig. 26 is an illustration showing an intensity distribution of light at the second position of an optical component in an example.

Fig. 27 is an illustration to illustrate an optical component production method according to an embodiment of the present invention.

Fig. 28 is an illustration to illustrate an optical component production method according to an embodiment of the present invention.

Fig. 29 is a configuration diagram of an optical system according to an embodiment of the present invention.

Fig. 30 is a diagram showing a cross-sectional refractive index profile at the first position of an optical component in Example 1.

Fig. 31 is a diagram showing a cross-sectional refractive index profile at the second position of the optical component in Example 1.

Fig. 32 is a diagram showing an intensity distribution of output light from the second position of the optical component in Example 1.

Fig. 33 is a diagram showing a cross-sectional refractive index profile at the first position of an optical component in Example 2.

Fig. 34 is a diagram showing a cross-sectional refractive index profile at the second position of the optical component in Example 2.

Fig. 35 is a diagram showing an intensity distribution of output light from the second position of the optical component in Example 2.

Fig. 36 is a diagram showing a cross-sectional refractive index profile at the first position of an optical component in Example 3.

Fig. 37 is a diagram showing a cross-sectional refractive index profile at the second position of the optical component in Example 3.

Fig. 38 is a diagram showing an intensity distribution of output light from the second position of the optical component in Example 3.

**Explanation of Reference Numbers**

1 and 2:optical system, 10:optical component, 20:optical connector, 30:light source, 40:functional element, 50: light receiving device, 100:optical fiber, 110:first region, 111:first position, 120:second region, 121:second position, 131: first core region, 132:second core region, 133:cladding region, 3:optical system, 12:optical component, 22:light source, 200:optical fiber, 210:first region, 211:core region, 212:cladding region, 220:second region, 4:optical system, 14:optical component, 24:light source, 300:optical fiber, 310:first region, 311:first position, 320:second region, 321:second position, 331:first core region, 332:second core region, 333:cladding region.

**Best Modes for Carrying Out the Invention**

The best mode for carrying out the present invention will be described below in detail with reference to the accompanying drawings. In the description of the drawings like elements or portions will be denoted by the same reference symbols, without redundant description.

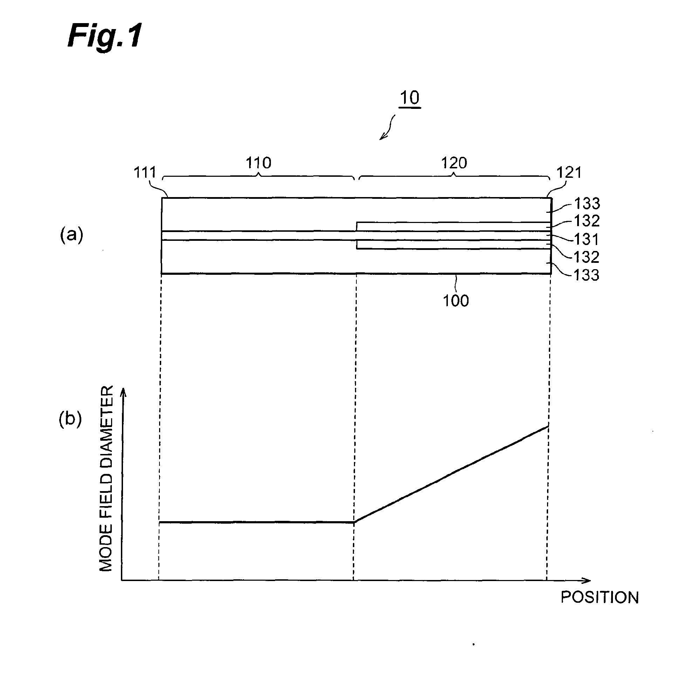

Fig. 1 is an illustration to illustrate a configuration of an optical component according to an embodiment of the present invention. In the same figure (a) shows a cross section including the optical axis of the optical component 10 according to the embodiment, and (b) a distribution of mode field diameters along the longitudinal direction of the optical component 10.

As shown in (a) of the same figure, the optical component 10 is an optical component of an optical waveguide type produced on the basis of silica-based optical fiber 100 being an optical waveguide, and has a first region 110 and a second region 120 along the longitudinal direction of the optical fiber 100. This optical fiber 100 has a first position 111 at one end and a second position 121 at the other end. The cross-sectional refractive index profile in the first region 110 is of the step index type, and a low refractive index cladding region 133 surrounds the periphery of a high refractive index first core region 131. No spliced portion exists between the first region 110 and the second region 120, and the first region 110 and the second region 120 are provided in so-called optical fiber 100 of one continuous length. Namely, the optical fiber 100 being an optical waveguide is a single optical fiber in which the first region 110 and the second region 120 are formed, and, as described above, there is no spliced portion between the first region and the second region. Therefore, the outside diameter of the first region 110 is equal to that of the second region 120.

The cross-sectional refractive index profile in the second region 120 is one having a second core region 132 between the first core region 131 and the cladding region 133. Refractive indices of the second core region 132 in the second region 120 continuously vary along the longitudinal direction, the refractive indices near the boundary to the first region 110 are approximately equal to that of the cladding region 133, and the refractive indices near the second position 121 are approximately equal to the refractive index of the first core region 131. The variation of cross-sectional refractive index profiles is also continuous in the vicinity of the boundary between the first region 110 and the second region 120.

At a predetermined wavelength this optical component 10 guides light in the single mode at the first position 111, the cross-sectional refractive index profiles in the second region 120 continuously vary along the longitudinal direction, and the mode field diameter at the first position 111 is different from that at the second position 121. The predetermined wavelength is an operating wavelength of this optical component 10, and, for example, in a case where the optical component 10 is used in optical communication, the predetermined wavelength is any one of wavelengths in a wavelength band of signal light from the O-band to the U-band. The terms "continuously vary" and "variation is continuous" may include a constant range without change.

The optical component 10 is characterized in that at the predetermined wavelength the overlap rate between a field distribution of light having propagated from the first position 111 and having arrived at the second position 121, and the Gaussian distribution is not less than 90%. The optical component 10 in this configuration reduces the optical transmission loss between the first position 111 and the second position 121 where the mode field diameters are different from each other.

An overlap rate Ce between two field distributions $\varphi_1$, $\varphi_2$ is represented by Eq (1) below. The Gaussian distribution is represented by Eq (2) below. In these equations x and y are values on two coordinate axes orthogonal to each other with the origin on the optical axis in a cross section perpendicular to the optical axis of the optical fiber 100. Where one of the two field distributions for calculation of the overlap rate is the Gaussian distribution, the value of w in Eq (2) below is replaced by a value equal to half of a specific mode field diameter.

$$Ce^2 = \frac{\left| \iint \phi_1^* \phi_2 \, dxdy \right|^2}{\iint |\phi_1|^2 \, dxdy \cdot \iint |\phi_2|^2 \, dxdy} \qquad \cdots (1)$$

$$\phi(x, y) = C \exp\left( -\frac{x^2 + y^2}{w^2} \right) \qquad \cdots (2)$$

The optical component 10 is preferably configured so that at each of positions along the longitudinal direction between the first position 111 and the second position 121 and at the predetermined wavelength, the overlap rate between the field distribution of light having propagated from the first position 111 and having arrived at the position in question, and the Gaussian distribution is not less than 90%; or preferably configured so that the overlap rate between the field distribution of the fundamental-mode light and the Gaussian distribution is not less than 90%; or preferably configured so that the overlap rate between the field distribution of the light having propagated from the first position 111 and having arrived at the position in question and the field distribution of the fundamental-mode light is not less than 90%.

The optical component 10 is preferably configured so that at the predetermined wavelength the mode field diameter at the second position 121 is not less than 10% different from the mode field diameter at the first position 111. The optical component 10 is also preferably configured so that V parameters vary along the longitudinal direction between the first position 111 and the second position 121, and preferably configured so that the V parameter at the second position 121 is not less than 2.4. Here the V parameter is defined by Eq (3) below. In Eq (3), a represents the radius of the core, $\lambda$ the wavelength, $n_1$ the refractive index of the core region, and $n_0$ the refractive index of the cladding region.

$$V^2 = \left( \frac{2\pi a}{\lambda} \right)^2 \left( n_1^2 - n_0^2 \right) \qquad \cdots (3)$$

In general the value of the V parameter needs to be not more than 2.4 for the single-mode operation of optical fiber, whereas the optical component 10 in the present embodiment is able to operate in the single mode even if the value of the V parameter is not less than 2.4.

The optical component 10 is also preferably configured so that at each of positions along the longitudinal direction between the first position 111 and the second position 121, and at the predetermined wavelength, a change rate of field distributions of the fundamental-mode light is not more than 0.1/mm. Here the change rate of field distributions of the fundamental-mode light is a change amount per unit length of overlap rate between field distributions of the fundamental-mode light.

It is noted that the first region 110 is not always indispensable, and the optical component 10 may consist of only the second region 120 containing the second core region 132.

Next, the operation of the optical component 10 according to the present embodiment will be described. When light of the predetermined wavelength to become the single mode in the first region 110 is input at the first position 111 from the outside, the light propagates in the fundamental mode as confined in the core region 131 in the first region 110. The field distribution of the guided light at this time can be well approximated by the Gaussian distribution.

The guided light in the first region 110 soon enters the second region 120, propagates through the second region 120, and emerges from the second position 121 to the outside. The light propagating in the second region 120 is the fundamental mode in the beginning, but, in a case where a region permitting existence of higher-order modes exists in the second region 120, optical coupling occurs from the fundamental mode to the higher-order modes in that region. In consequence, the fundamental mode and the higher-order modes are mixed immediately before the output from the second position 121, and the intensity distribution of the light outputted from the second position 121 to the outside is a superposition of light intensity distributions of the respective modes.

In the optical component 10 of the present embodiment, the mode field diameter increases toward the second position 121, and thus the diameter of the light outputted from the second position 121 to the outside becomes larger than that of the light input from the outside into the first position 111. Since the overlap rate between the field distribution of the actually guided light and the Gaussian distribution at the second position 121 is not less than 90%, most of the light from the first position 111 to the second position 121 can propagate while remaining in the fundamental mode, whereby the optical transmission loss is reduced between the first position 111 and the second position 121.

The ordinary single-mode optical fibers have a small mode field diameter, and light emerging from an end face thereof diverges, so as to cause a large coupling loss. In order to achieve a small coupling loss, it is necessary to convert the diverging light emerging from the end face of optical fiber, into parallel light. However, it requires a collimator lens, which increases the number of parts and cost. In contrast to it, the optical component 10 of the present embodiment is able to reduce the coupling loss without use of the collimator lens, and thus to suppress the increase in the number of parts.

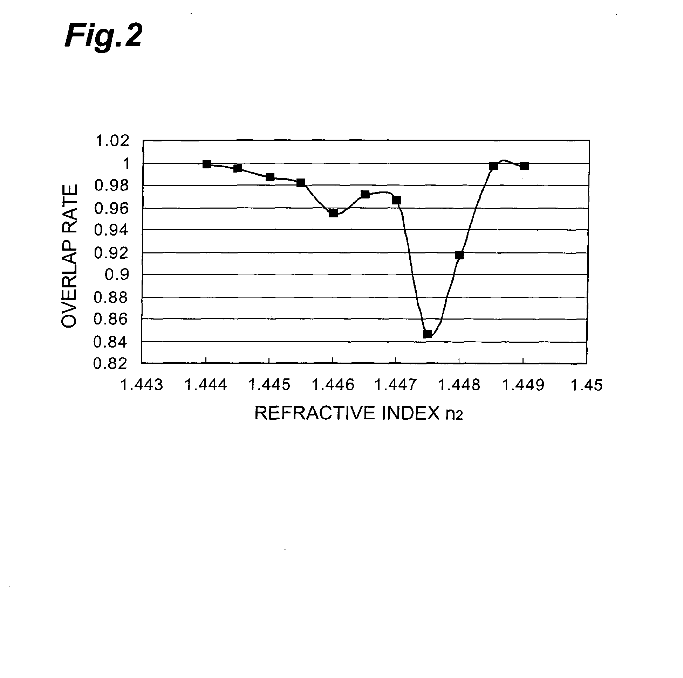

Examples of the optical component 10 according to the present embodiment will be described with reference to Figs. 2 to 7. In the examples (simulation examples), the outside diameter of the first core region 131 of optical fiber 100 was 8 $\mu$m, the outside diameter of the second core region 132 100 $\mu$m, and the outside diameter of the cladding region 133 125 $\mu$m. The refractive index $n_1$ of the first core region 131 was set to 1.449, the refractive index $n_0$ of the cladding region 133 to 1.444, and the refractive index $n_2$ of the second core region 132 to a value between $n_0$ and $n_1$. The length of the second region 120 was 10 mm. The wavelength was 1.55 $\mu$m.

Fig. 2 is a graph showing a relation between refractive index $n_2$ and overlap rate between two field distributions, which were obtained one as a field distribution of the fundamental mode where the refractive index of the second core region 132 was $n_2$ and the other as a field distribution of the fundamental mode where the refractive index of the second core region 132 was ($n_2$+0.005). As apparent from this graph, the overlap rate becomes small when the refractive index $n_2$ of the second core region 132 is near 1.4475, and the overlap rate is not less than 90% when the refractive index $n_2$ of the second core region 132 is set to the other values.

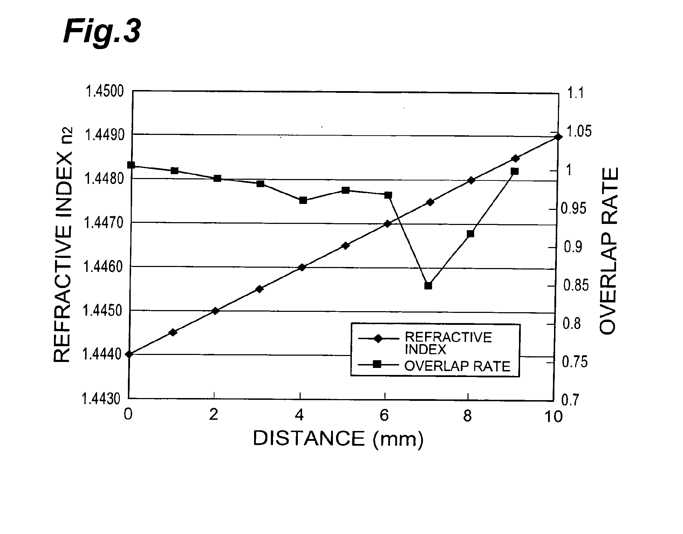

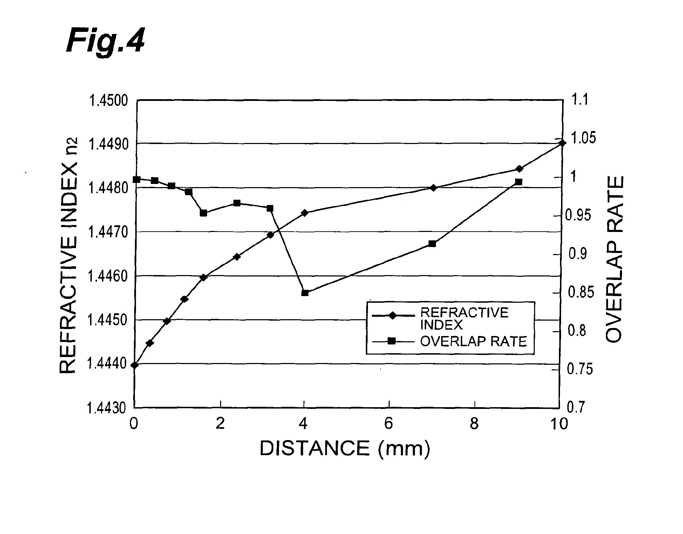

Fig. 3 and Fig. 4 are graphs showing the longitudinal distribution of refractive index $n_2$ of the second core region 132 and the longitudinal distribution of overlap rate. Fig. 3 shows a case where the change rate of refractive index $n_2$ of the second core region 132 in the longitudinal direction of optical fiber 100 is constant (case 1), and Fig. 4 a case where the change rate of refractive index $n_2$ of the second core region 132 in the longitudinal direction of optical fiber 100 is not constant (case 2). In each of Fig. 3 and Fig. 4, the horizontal axis represents the distance along the longitudinal direction from the first position 111, the left vertical axis the refractive index $n_2$ of the second core region 132, and the right vertical axis the overlap rate between the field distributions of the fundamental-mode light. Namely, the right vertical axis represents the overlap rate between the field distribution of the fundamental mode where the refractive index of the second core region 132 is $n_2$ and the field distribution of the fundamental mode where the refractive index of the second core region 132 is ($n_2$+0.005).

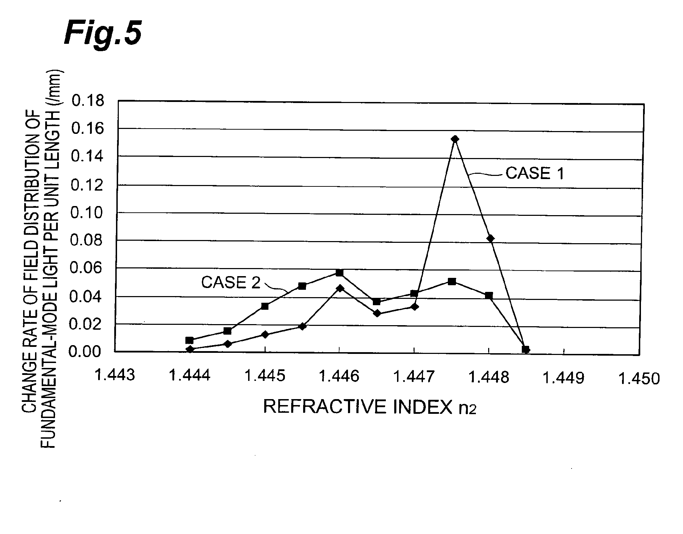

Fig. 5 is a graph showing a relation between a change rate of field distributions of fundamental-mode light and refractive index $n_2$ of the second core region 132 in each of case 1 and case 2. As apparent from this graph, case 1 shows a large change late of the field distribution of the fundamental-mode light per unit length of 0.154/mm when the refractive index $n_2$ of the second core region 132 is near 1.448. In contrast to it, case 2 shows a small change late of the field distribution of the fundamental-mode light per unit length of not more than 0.058/mm at each of positions along the longitudinal direction. In more detail, in case 1 where the refractive index $n_2$ of the second core region 132 linearly increases toward the second position 121 in the longitudinal direction, there is a region in which the change rate of the field distribution of the fundamental-mode light per unit length is large. On the other hand, a change rate of field distributions of fundamental-mode light is small over the whole in case 2. In this case 2, among portions along the longitudinal direction of the second core region 132, a length of a portion where the overlap rate between field distributions of the fundamental mode at the refractive index $n_2$ of the portion is smaller than that at the refractive index $n_2$ of another portion is set longer than a length of the other portion. Namely, in case 2, among portions along the longitudinal direction of the second core region 132, a portion where the overlap rate between field distributions of the fundamental mode at the refractive index

$n_2$ of the portion is smaller than that at the refractive index $n_2$ of the other portion, has the change (increase) rate of refractive index $n_2$ set smaller than that of the other portion.

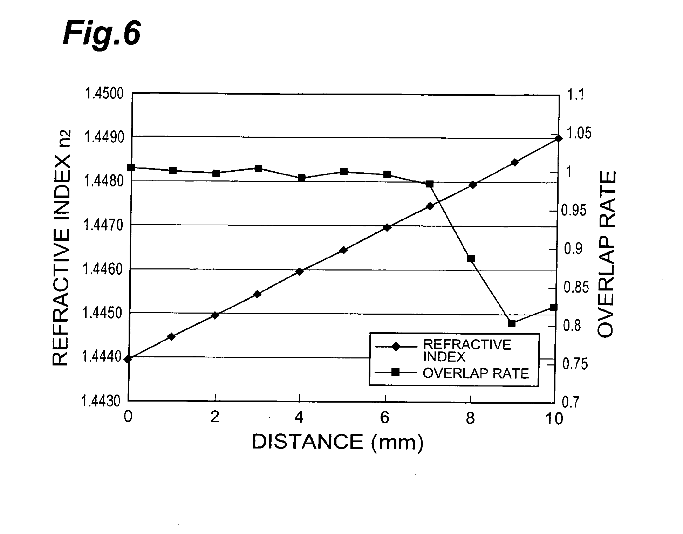

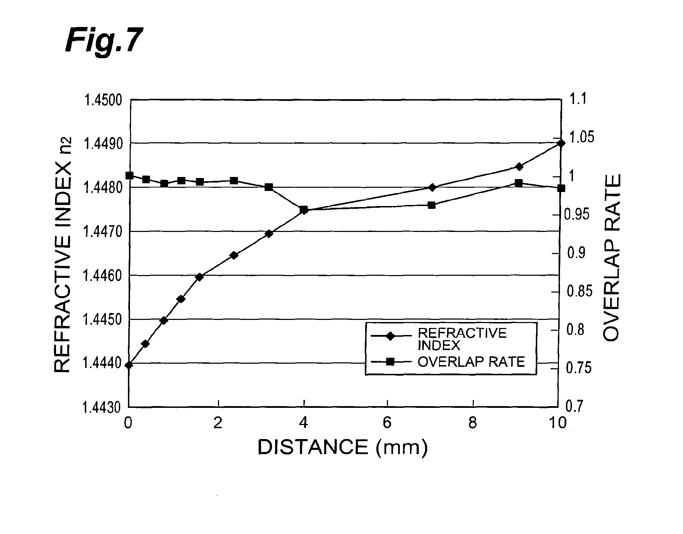

Fig. 6 and Fig. 7 are graphs showing longitudinal distributions of the refractive index $n_2$ of the second core region 132 and the overlap rate. Fig. 6 shows a case where the change rate of refractive index $n_2$ of the second core region 132 in the longitudinal direction of optical fiber 100 is constant (case 1), and Fig. 7 a case where the change rate of refractive index $n_2$ of the second core region 132 in the longitudinal direction of optical fiber 100 is not constant (case 2). In each of Figs. 6 and 7, the horizontal axis represents the distance along the longitudinal direction from the first position 111, the left vertical axis the refractive index $n_2$ of the second core region 132, and the right vertical axis the overlap rate between the field distribution of actually guided light and the field distribution of the fundamental-mode light. As apparent from this graph, the overlap rate between the field distribution of actually guided light and the field distribution of the fundamental-mode light at the second position 121 is 77.3% in case 1, whereas it is high, 98.5%, in case 2 with small loss per unit length.

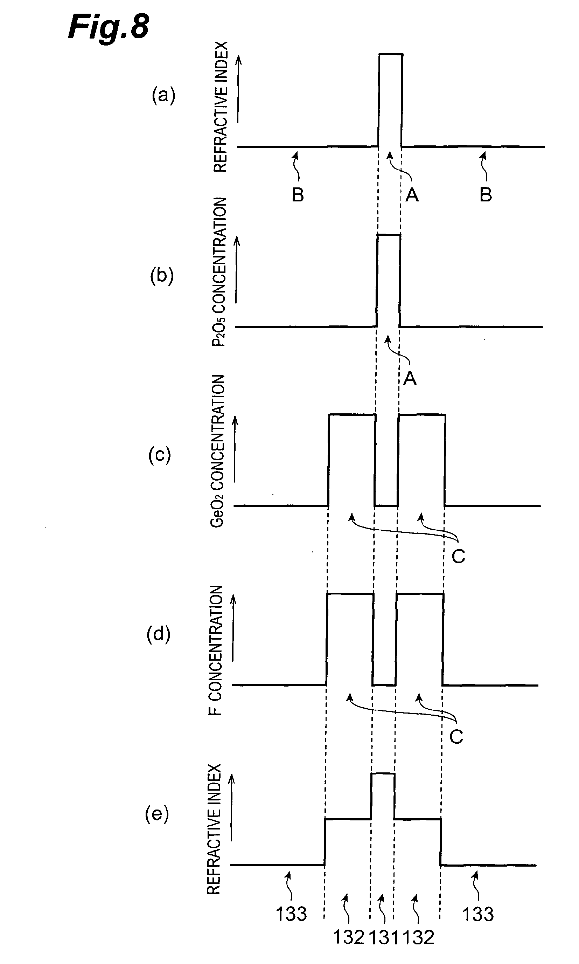

Next, a method of producing the optical component 10 according to the present embodiment will be described. Fig. 8 is an illustration to illustrate an optical component production method according to an embodiment of the present invention. In the same figure, (a) shows a cross-sectional refractive index profile of an initial optical fiber, (b) a $P_2O_5$ dopant concentration profile, (c) a $GeO_2$ dopant concentration profile, (d) an F dopant concentration profile, and (e) a cross-sectional refractive index profile in the second region 120 after exposure to the refractive index change inducing light. These are profiles in the radial direction.

In this production method, an optical fiber is prepared at the beginning. The optical fiber prepared herein has a cross-sectional refractive index profile of the step index type similar to that of the first region 110 of the optical component 10 to be produced, and has a core region A and a cladding region B consisting primarily of silica glass ((a) in the same figure). The core region A is uniformly doped, for example, with $P_2O_5$ as a refractive index increasing agent ((b) in the same figure). A portion C (a portion which will become the second core region 132 later) of the cladding region B near the core region A is doped with $GeO_2$ as a photosensitive agent, so that this portion C has the photosensitivity to the refractive index change inducing light ((c) in the same figure). The refractive index change inducing light is light of a wavelength capable of inducing a change of refractive index of silica glass doped with $GeO_2$ as a photosensitive agent, and light preferably applicable is, for example, ultraviolet laser light of the wavelength of 248 nm emitted from a KrF excimer laser source.

Since $GeO_2$ is not only a photosensitive agent but also a refractive index increasing agent, the $GeO_2$-doped portion C in the cladding region is also doped with element F as a refractive index decreasing agent ((d) in the same figure). As the concentration profiles of the respective additives are set in this manner, the cross-sectional refractive index profile as shown in (a) of the same figure and the photosensitivity profile in the shape similar to the profile shown in (c) of the same figure are realized.

A partial region (a region to become the second region 120 of the optical component 10) along the longitudinal direction of the optical fiber prepared as described above is exposed to the refractive index change inducing light. This exposure increases the refractive index of the portion C doped with $GeO_2$ in the cladding region B in the exposed region, and the refractive index increased portion becomes the second core region 132, thus achieving the cross-sectional refractive index profile as shown in (e) of the same figure. At this time, irradiation quantities of the refractive index change inducing light continuously vary in the longitudinal direction so that the irradiation quantity is small at positions near the boundary to the first region 110 and large at positions near the second position 121. The irradiation quantity of the refractive index change inducing light in the vicinity of the second position 121 is a quantity of light enough to increase the refractive index of the second core region 132 to achievement of the desired cross-sectional refractive index profile at the second position 121.

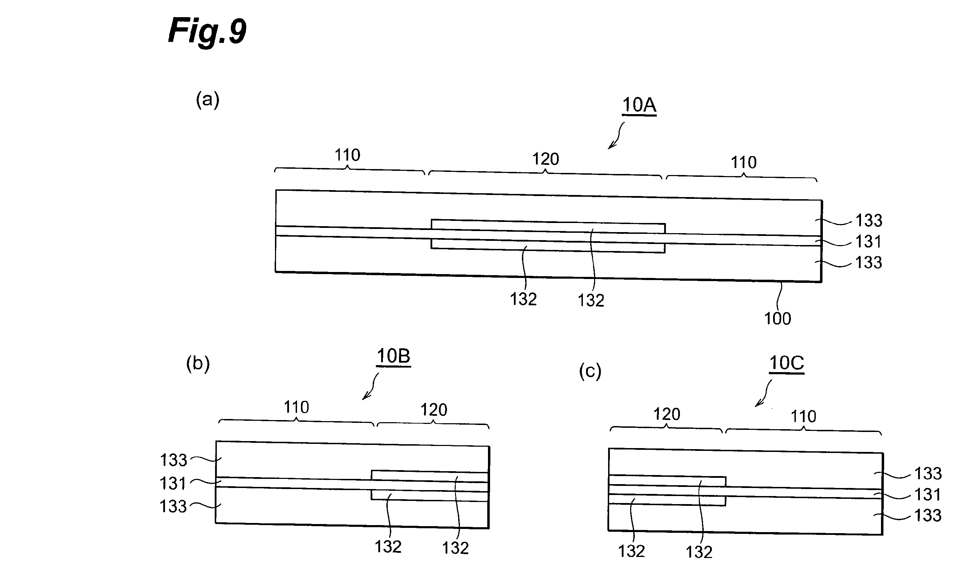

Fig. 9 is an illustration to illustrate an optical component production method according to an embodiment of the present invention. This illustration shows cross sections including the optical axis, of respective optical components 10A to 10C. Each of the optical component 10B shown in (b) of the same figure and the optical component 10C shown in (c) of the same figure has a configuration similar to that of the optical component 10 shown in Fig. 1. The optical component 10A shown in (a) of the same figure can be called a semi-finished product with respect to the optical components 10B, 10C, in which an intermediate region along the longitudinal direction is exposed to the refractive index change inducing light to become the second region 120. The optical component 10A is cut at a certain position in the second region 120 to be divided into two, the optical component 10B and optical component 10C. If the region exposed to the refractive index change inducing light includes one end of optical fiber, the optical component 10 as shown in Fig. 1 can be obtained immediately after the exposure.

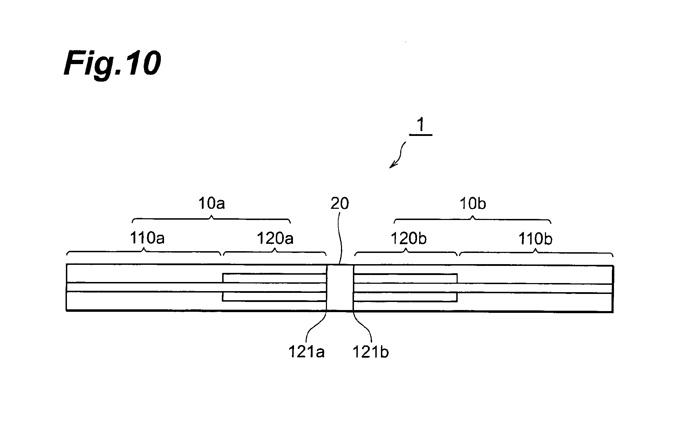

Next, an embodiment of an optical system according to the present invention will be described. Fig. 10 is a configuration diagram of an optical system according to an embodiment of the present invention. The optical system 1 shown in this figure is a system in which optical component 10a and optical component 10b are connected by an optical connector 20. The optical components 10a, 10b have a configuration similar to that of the optical component 10 in the present embodiment as described above, and the second regions 120a, 120b of the respective components are connector-coupled by the optical connector 20.

In this optical system 1, light having propagated from the first region 110a of the optical component 10a into the second region 120a is outputted from the second position 121 a of the optical component 10a, travels via the optical connector 20 to enter the second position 121b of the optical component 10b, and propagates from the second region 120b to the first region 110b of the optical component 10b. The light outputted from the second position 121 a of the optical component 10a has a large beam diameter and low power density. Therefore, damage can be prevented at the end faces optically coupled.

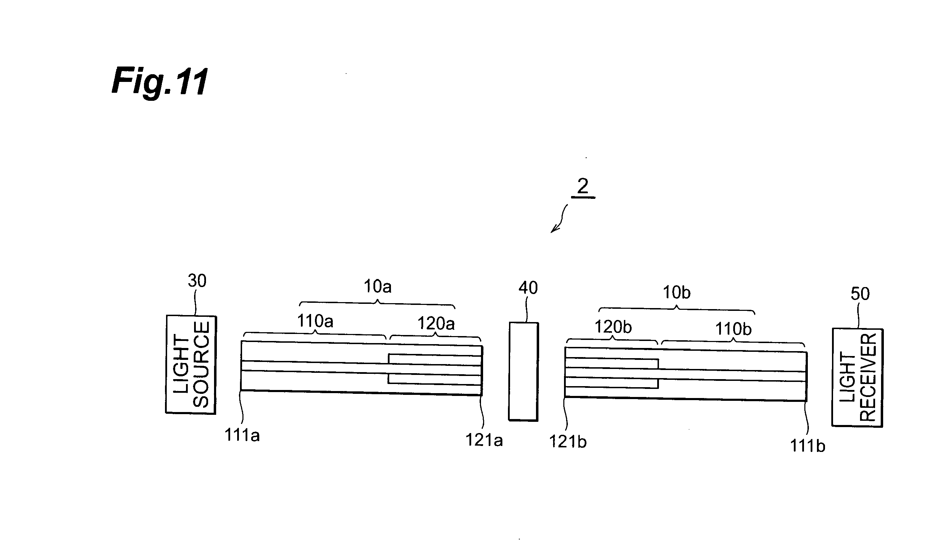

Fig. 11 is a configuration diagram of an optical system according to another embodiment of the present invention. The optical system 2 shown in this figure is comprised of a light source 30, an optical component 10a, a functional element 40, an optical component 10b, and a light receiving device 50. The optical components 10a, 10b have a configuration similar to that of the optical component 10 in the present embodiment as described above, and the second regions 120a, 120b of the respective components are placed on either side of the functional element 40.

In this optical system 2, light emitted from the light source 30 enters the first position 111a of the optical component 10a, propagates from the first region 110a to the second region 120a of the optical component 10a, and is outputted from the second position 121a of the optical component 10a to enter the functional component 40. The light through the functional component 40 enters the second position 121 b of the optical component 10b, propagates from the second region 120b to the first region 110b of the optical component 10b, and is outputted from the first position 111b of the optical component 10b to enter the light receiving device 50 to be received thereby.

The functional element 40 is, for example, an optical filter, an optical isolator, or the like, and is placed in a space between the second position 121a of the optical component 10a and the second position 121b of the optical component 10b. This configuration permits the optical system 2 to perform monitoring of transmission characteristics or the like.

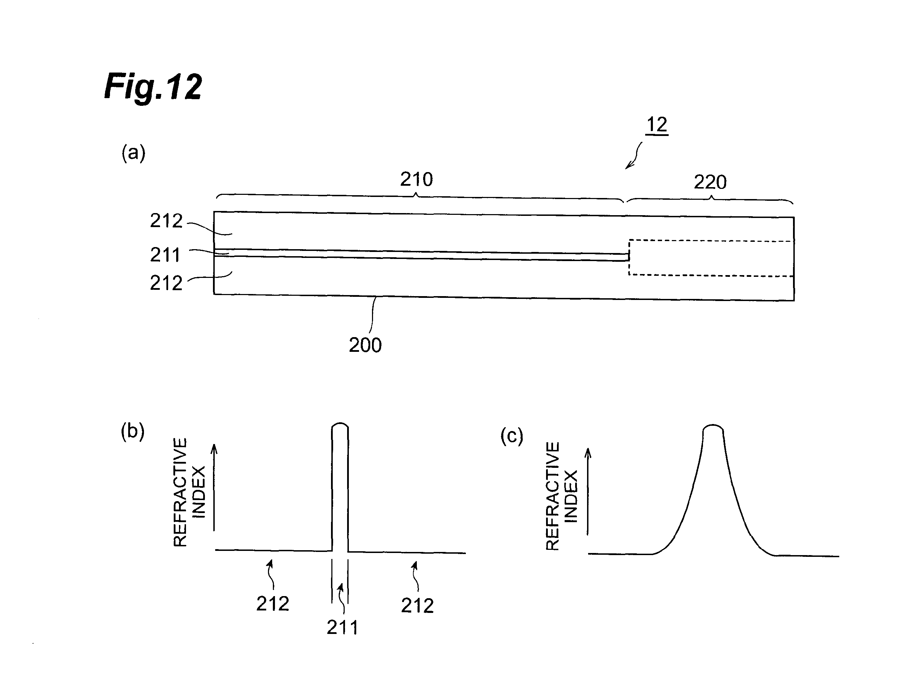

Another embodiment of the present invention will be described below. Fig. 12 is an illustration to illustrate a configuration of an optical component according to an embodiment of the present invention.

In the same figure, (a) shows a cross section including the optical axis of this optical component 12, (b) a cross-sectional refractive index profile in the first region 210, and (c) a cross-sectional refractive index profile in the second region 220.

As shown in (a) of the same figure, the optical component 12 is an optical component of the optical waveguide type produced on the basis of silica-based optical fiber 200 being an optical waveguide, and has a first region 210 and a second region 220 along the longitudinal direction of the optical fiber 200. The mode field diameter in the second region 220 is larger than that in the first region 210.

The cross-sectional refractive index profile in the first region 210 is preferably of the step index type, and a cladding region 212 of a low refractive index surrounds the periphery of a core region 211 of a high refractive index ((b) in the same figure).

Preferably, the first region 210 permits transmission in the single mode. In this case, where the first region 210 of the optical component 12 is connected to a single-mode optical fiber commonly used as an optical transmission path in an optical communication system, the connection loss is small at the connected position.

The cross-sectional refractive index profile in the second region 220 is one capable of substantializing a graded index lens, preferably of the graded index type; the refractive index is highest in the central region and gradually decreases with distance from the center and the refractive index is constant in a region where the distance from the center exceeds a certain value ((c) in the same figure).

No spliced portion exists between the first region 210 and the second region 220, and the first region 210 and the second region 220 are provided in so-called optical fiber 200 of one continuous length. Namely, the optical fiber 200 as an optical waveguide is a single optical fiber in which the first region 210 and the second region 220 are formed and in which no spliced portion exists between the first region and the second region, as described above. Therefore, the outside diameter of the first region 210 is equal to the outside diameter of the second region 220. The variation of cross-sectional refractive index profiles at the boundary between the first region 210 and the second region 220 is discontinuous or steep. The first region 210 includes one end of the optical fiber 200, while the second region 220 includes the other end of the optical fiber 200.

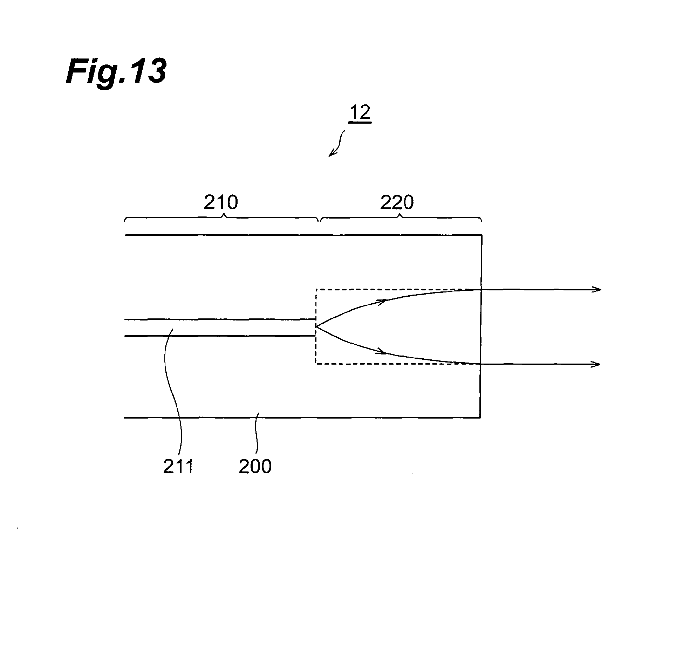

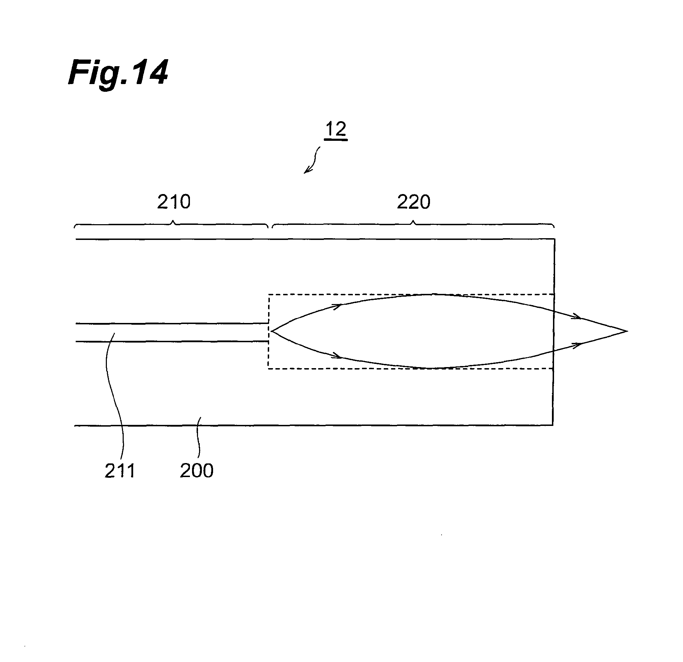

Next, the operation of the optical component 12 shown in Fig. 12 will be described. Fig. 13 is an illustration to illustrate a first operation example of the optical component according to an embodiment of the present invention. Fig. 14 is an illustration to illustrate a second operation example of the optical component according to an embodiment of the present invention. These figures show cross sections including the optical axis of the optical component 12, while also showing loci of rays in the cross section in the second region 220.

The mode field diameter in the second region 220 is larger than that in the first region 210 in the optical fiber 200 and the second region 220 has the cross-sectional refractive index profile capable of realizing the graded index lens; therefore, when the light having propagated as confined in the core region 211 of the first region 210 of optical fiber 200 is incident into the second region 220 of the optical fiber 200, it travels with a certain divergence angle immediately after the incidence. However, the light propagating in the second region 220 gradually decreases its divergence angle because of the converging action in the second region 220, soon becomes parallel light, and thereafter propagates as converging.

In a configuration wherein the light arrives at the position of the end face of the optical fiber 200 when the light propagating in the second region 220 becomes parallel light, as shown in Fig. 13, the light is outputted as parallel light from the end face to the outside. Namely, in this case, the optical component 12 is able to collimate the light propagating through the optical fiber 200 and to output the collimated light to the outside. In a configuration where the light travels in the opposite direction to the above, the light can be readily injected into the optical fiber 200.

On the other hand, in a configuration wherein the light arrives at the position of the end face of optical fiber 200 when the light propagating in the second region 220 becomes converging, as shown in Fig. 14, the light is outputted as converging light from the end face to the outside. Namely, in this case, the optical component 12 is able to condense the light propagating through the optical fiber 200 and to output the condensed light to the outside.

Since this optical component 12 has no spliced portion between the first region 210 and the second region 220, it demonstrates small loss and excellent efficiency of light input/output, as compared with the conventional components produced by fusion splice.

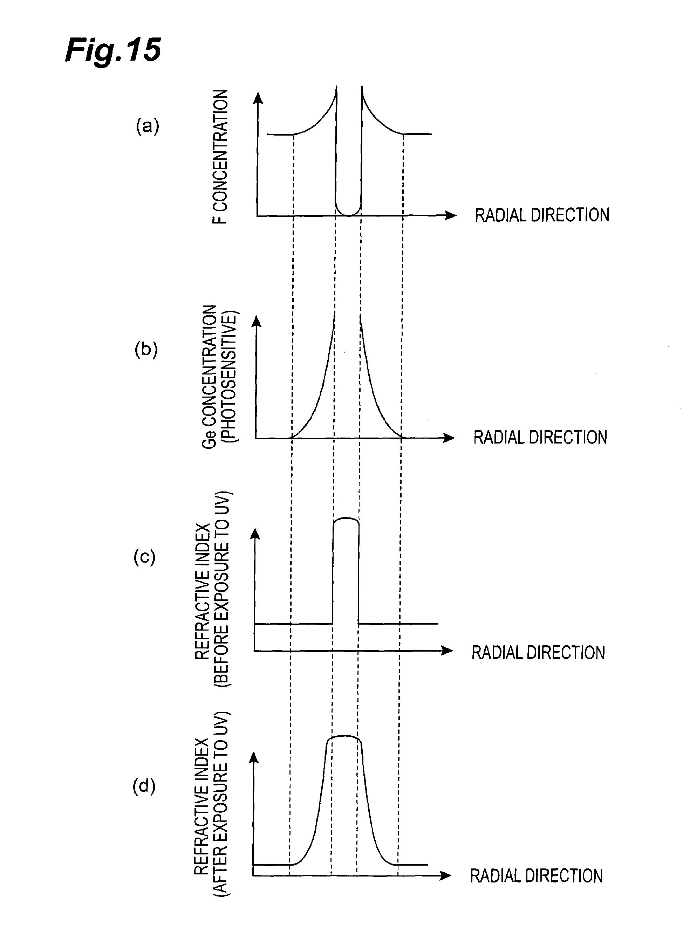

Next, a method of producing the optical component 12 shown in Fig. 12 will be described with reference to Figs. 15 to 18. Fig. 15 is an illustration to illustrate a first example of an optical component production method according to the present embodiment. In the same figure, (a) shows a dopant concentration profile of F being a refractive index decreasing agent, (b) a dopant concentration profile of Ge serving as a refractive index increasing agent and as a photosensitive agent, (c) a cross-sectional refractive index profile of an initial optical fiber, and (d) a cross-sectional refractive index profile in the second region 220 after exposure to the refractive index change inducing light. These are profiles in the radial direction.

In this first example, the optical fiber prepared is one as shown in (a) of the same figure, wherein the F dopant concentration becomes slightly larger with radial distance from the center in the core region, the F dopant concentration decreases with radial distance up to a certain predetermined radius in the cladding region, and the F dopant concentration is constant outside the predetermined radius. As shown in (b) of the same figure, the core region is not doped with Ge, the Ge dopant concentration decreases with radial distance up to the predetermined radius in the cladding region, and the region outside the predetermined radius is not doped with Ge. The optical fiber prepared has a cross-sectional refractive index profile of the step index type similar to that of the first region 210 of the optical component 12 to be produced, as shown in (c) of the same figure, and has a core region and a cladding region consisting primarily of silica glass.

A partial region (a region to become the second region 220 of the optical component 12) along the longitudinal direction of the optical fiber prepared as described above is exposed to the refractive index change inducing light. The refractive index change inducing light is light of a wavelength capable of inducing a change of refractive index of silica glass doped with Ge as a photosensitive agent, and light preferably applicable is, for example, ultraviolet laser light of the wavelength of 248 nm emitted from a KrF excimer laser source. This exposure increases the refractive index in the region having the photosensitivity in the cladding region in the exposed region. At this time, the higher the photosensitivity, i.e., the nearer the position to the core region, the greater the increase of refractive index. By properly setting irradiation quantities of the refractive index change inducing light, the exposed region comes to have a cross-sectional refractive index profile of the graded index type as shown in (d) of the same figure.

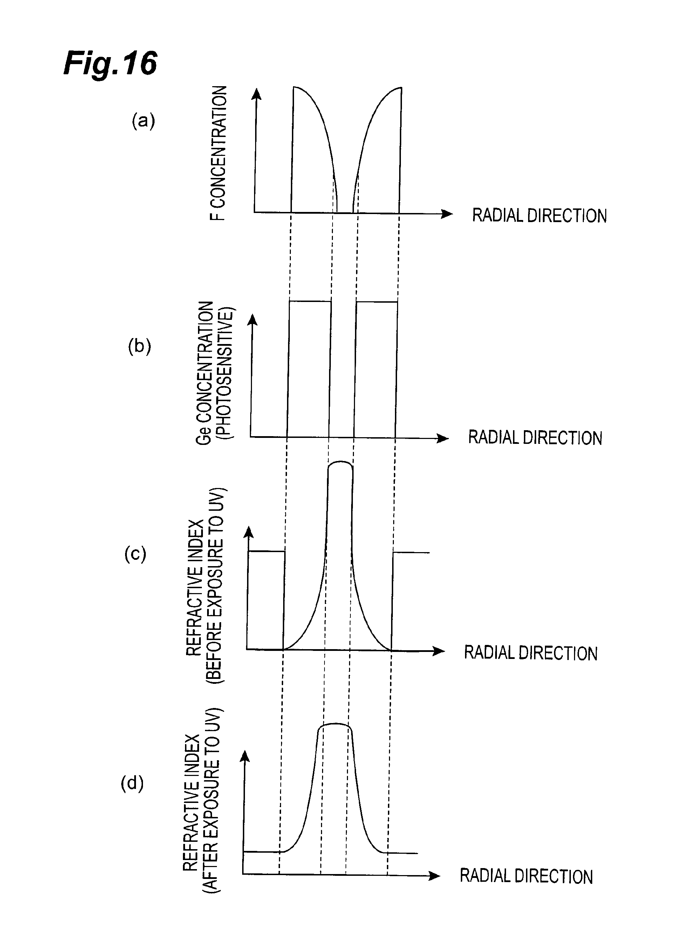

Fig. 16 is an illustration to illustrate a second example of an optical component production method according to an embodiment of the present invention. In the same figure, (a) shows a dopant concentration profile of F being a refractive index decreasing agent, (b) a dopant concentration profile of Ge serving as a refractive index increasing agent and as a photosensitive agent, (c) a cross-sectional refractive index profile of an initial optical fiber, and (d) a cross-sectional refractive index profile in the second region 220 after the exposure to the refractive index change inducing light. These are profiles in the radial direction.

In this second example, the optical fiber prepared is one as shown in (a) of the same figure, wherein the core region is not doped with F, the F dopant concentration increases with radial distance up to a certain predetermined radius in the cladding region, and a region outside the predetermined radius is not doped with F. As shown in (b) of the same figure, the core region is not doped with Ge, the region to the predetermined radius in the cladding region is doped with a constant concentration of Ge, and the region outside the predetermined radius is not doped with Ge. The cross-sectional refractive index profile of the optical fiber prepared is one as shown in (c) of the same figure, wherein the refractive index is high in the core region, the refractive index decreases with radial distance up to the predetermined radius in the cladding region, and the refractive index outside the predetermined radius is constant, lower than the refractive index of the core region, and higher than those up to the predetermined radius in the cladding region.

A partial region (a region to become the second region 220 of the optical component 12) along the longitudinal direction of the optical fiber prepared as described above is exposed to the refractive index change inducing light. This exposure increases the refractive index of the region with the photosensitivity in the cladding region in the exposed region. At this time, since the photosensitivity is constant in the range up to the predetermined radius in the cladding region, the refractive index increase amount is constant in this range. By properly setting irradiation quantities of the refractive index change inducing light, the exposed region comes to have a cross-sectional refractive index profile of the graded index type as shown in (d) of the same figure.

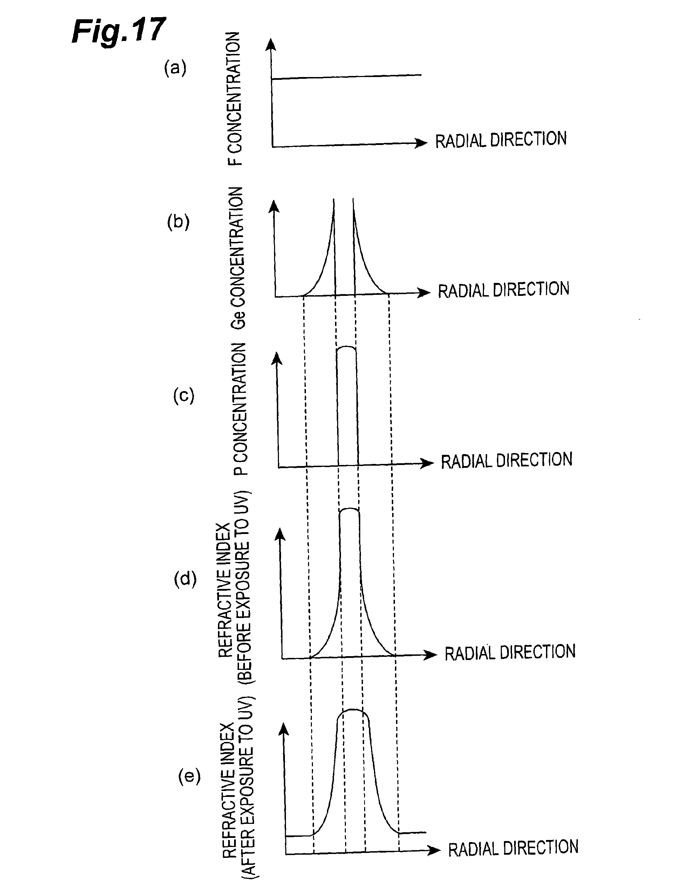

Fig. 17 is an illustration to illustrate a third example of an optical component production method according to an embodiment of the present invention. In the same figure, (a) shows a dopant concentration profile of F being a refractive index decreasing agent, (b) a dopant concentration profile of Ge serving as a refractive index increasing agent and as a photosensitive agent, (c) a dopant concentration profile of P being a refractive index increasing agent, (d) a cross-sectional refractive index profile of an initial optical fiber, and (e) a cross-sectional refractive index profile in the second region 220 after exposure to the refractive index change inducing light. These are profiles in the radial direction.

In this third example, the optical fiber prepared is one as shown in (a) of the same figure, wherein the core region and the cladding region both are doped with a constant concentration of F. As shown in (b) of the same figure, the core region is not doped with Ge, the Ge dopant concentration decreases with radial distance up to a predetermined radius in the cladding region, and the region outside the predetermined radius is not doped with Ge. Furthermore, as shown in (c) of the same figure, the core region is doped with P, and the cladding region is not doped with P. The cross-sectional refractive index profile of the optical fiber prepared is one as shown in (d) of the same figure, wherein the refractive index is high in the core region, the refractive index decreases with radial distance up to the predetermined radius in the cladding region, and the refractive index is low in the region outside the predetermined radius.

A partial region (a region to become the second region 220 of the optical component 12) along the longitudinal direction of the optical fiber prepared as described above is exposed to the refractive index change inducing light. This exposure increases the refractive index of the region with the photosensitivity in the cladding region in the exposed region. At this time, the higher the photosensitivity, i.e., the nearer the position to the core region, the greater the degree of increase of refractive index. By properly setting irradiation quantities of the refractive index change inducing light, the exposed region comes to have a cross-sectional refractive index profile of the graded index type as shown in (e) of the same figure.

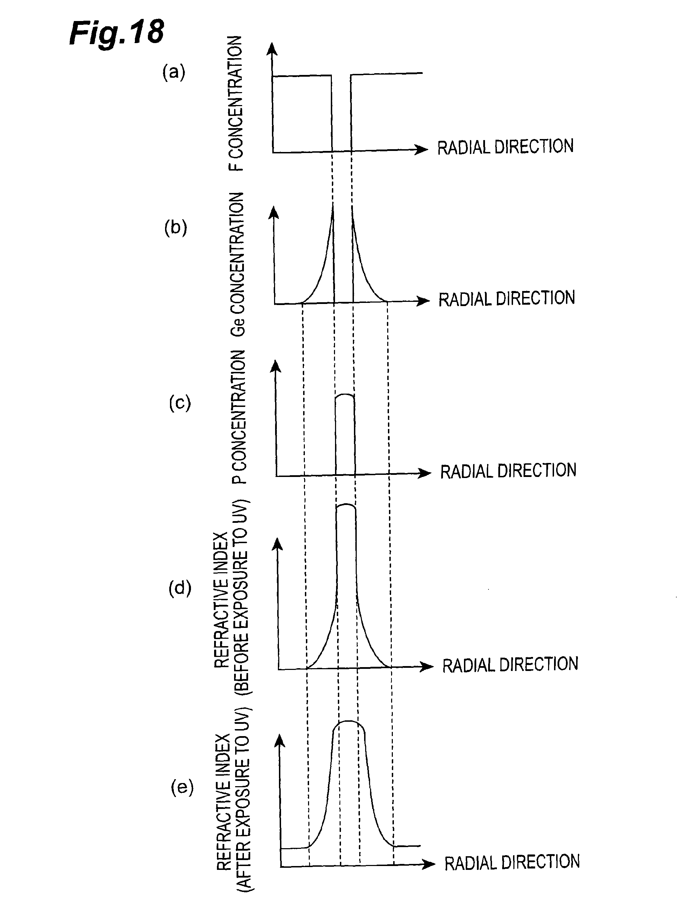

Fig. 18 is an illustration to illustrate a fourth example of an optical component production method according to an embodiment of the present invention. In the same figure, (a) shows a dopant concentration profile of F being a refractive index decreasing agent, (b) a dopant concentration profile of Ge serving as a refractive index increasing agent and as a photosensitive agent, (c) a dopant concentration profile ofP being a refractive index increasing agent, (d) a cross-sectional refractive index profile of an initial optical fiber, and (e) a cross-sectional refractive index profile in the second region 220 after exposure to the refractive index change inducing light. These are profiles in the radial direction.

In this fourth example, the optical fiber prepared is one as shown in (a) of the same figure, wherein the core region is not doped with F and the cladding region is doped with a constant concentration of F. As shown in (b) of the same figure, the core region is not doped with Ge, the Ge dopant concentration decreases with radial distance up to a predetermined radius in the cladding region, and the region outside the predetermined radius is not doped with Ge. Furthermore, as shown in (c) of the same figure, the core region is doped with P, and the cladding region is not doped with P. The cross-sectional refractive index profile of the optical fiber prepared is one as shown in (d) of the same figure, wherein the refractive index is high in the core region, the refractive index decreases with radial distance up to the predetermined radius in the cladding region, and the refractive index is low in the region outside the predetermined radius.

When compared with the aforementioned third example (Fig. 17), this fourth example (Fig. 18) is advantageous in that, since the core region is not doped with F being the refractive index decreasing agent, the dopant concentration of P being the refractive index increasing agent can be lower, thereby obtaining the similar cross-sectional refractive index profile.

A partial region (a region to become the second region 220 of the optical component 12) along the longitudinal direction of the optical fiber prepared as described above is exposed to the refractive index change inducing light. This exposure increases the refractive index of the region with photosensitivity in the cladding region in the exposed region. At this time, the higher the photosensitivity, i.e., the nearer the position to the core region, the greater the degree of increase of refractive index. By properly setting irradiation quantities of the refractive index change inducing light, the exposed region comes to have a cross-sectional refractive index profile of the graded index type as shown in (e) of the same figure.

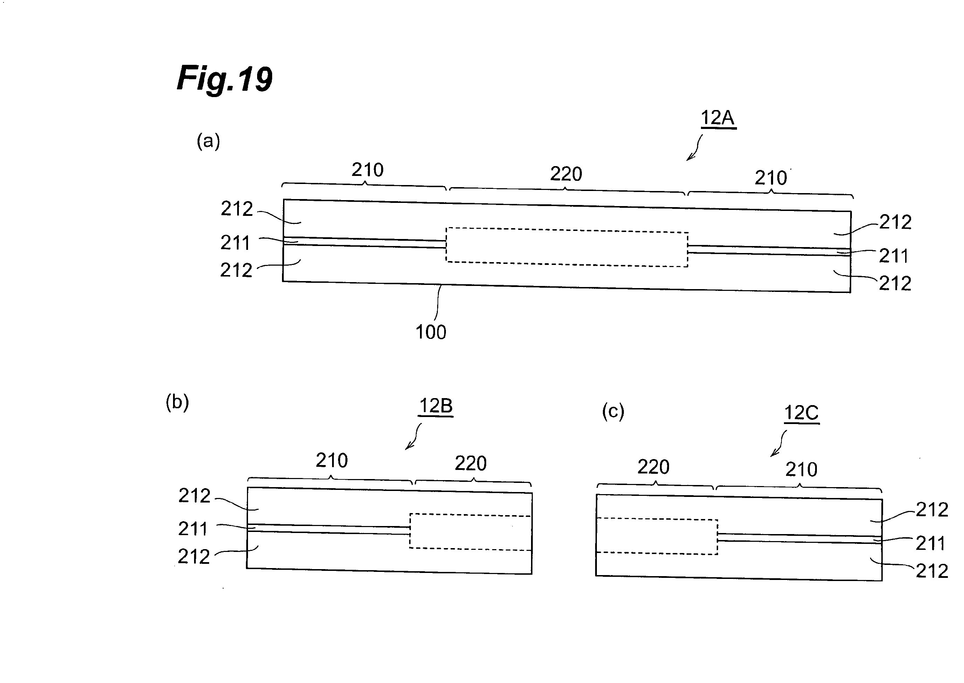

Fig. 19 is an illustration to illustrate an optical component production method according to an embodiment of the present invention. This figure shows cross sections including the optical axis of respective optical components 12A to 12C. Each of the optical component 12B shown in (b) of the same figure and the optical component 12C shown in (c) of the same figure has a configuration similar to that of the optical component 12 shown in Fig. 12. The optical component 12A shown in (a) of the same figure can be called a semi-finished product with respect to the optical components 12B, 12C, and an intermediate region along the longitudinal direction is exposed to the refractive index change inducing light to become the second region 220. By cutting the optical component 12A at a certain position in the second region 220, the optical component 12A is divided into two, the optical component 12B and optical component 12C. Where the region exposed to the refractive index change inducing light includes one end of the optical fiber, the optical component 12 as shown in Fig. 12 can be obtained immediately after the exposure.

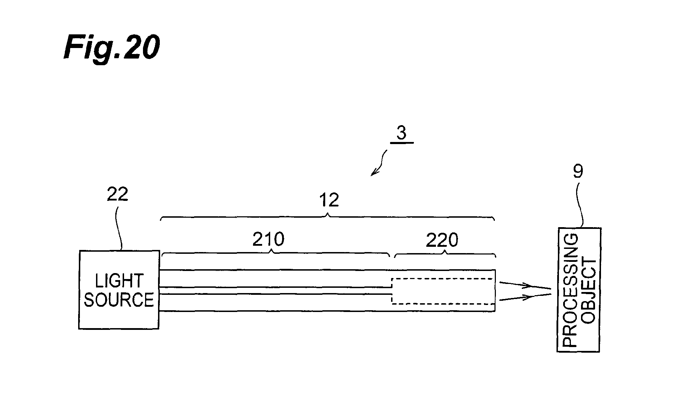

Next, an optical system 1 according to the present embodiment will be described. Fig. 20 is a configuration diagram of an optical system according to an embodiment of the present invention. The optical system 3 shown in this figure is a laser processing system for processing a processing object 9, and is provided with the optical component 12 of the present embodiment described above, and a laser source 22. The laser source 22 is a source of emitting laser light to be projected onto the processing object 9. The optical component 12 receives the laser light emitted from the laser source 22, at one end, sequentially guides the input laser light through the first region 210 and through the second region 220, and thereafter outputs the laser light from the other end to the outside, thereby projecting the output laser light onto the processing object 9.

A lens system for condensing the light emitted from the laser source 22 and for injecting the light into one end of the optical component 12 may be provided between the laser source 22 and the one end of the optical component 12. Furthermore, a lens system for condensing the light emerging from the other end of the optical component 12 and for projecting the light onto the processing object 9 may be provided between the other end of the optical component 12 and the processing object 9.

The light emerging from the other end of the optical component 12 is properly set depending upon a processing purpose or the like; for example, it may be collimated as shown in Fig. 13 or converged as shown in Fig. 14.

This optical system 3 is a system for guiding the light emitted from the laser source 22, from the first region 210 to the second region 220 of the optical component 12, thereby collimating or condensing the light and outputting the collimated or condensed light from the other end of the optical component 12 to the outside. However, the optical component 12 may be arranged to guide the light from the second region 220 to the first region 210 and, in this case, the light emitted from the light source 22 can be readily injected into the other end of the optical component 12.

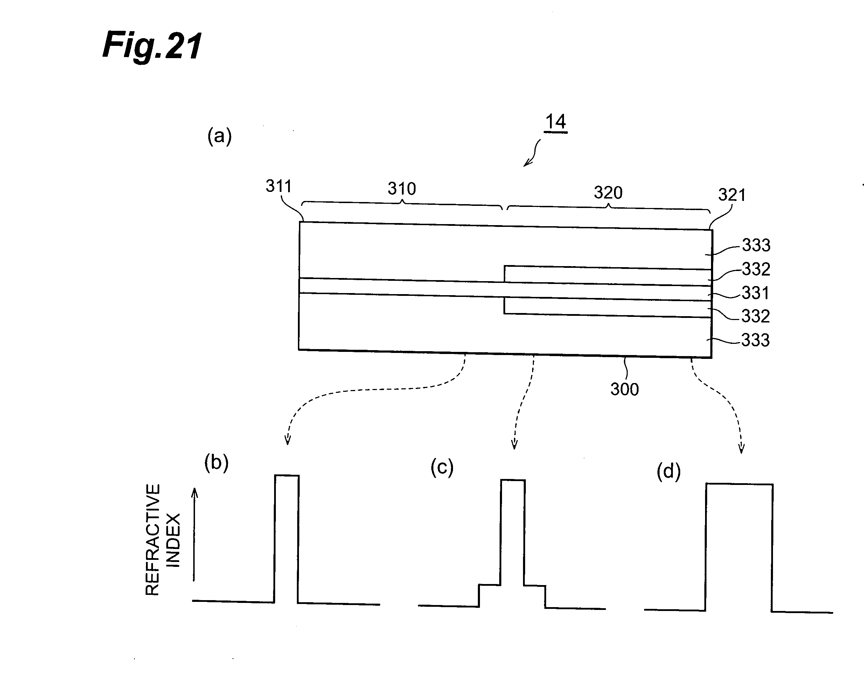

Furthermore, still another embodiment of the present invention will be described below. Fig. 21 is an illustration to illustrate a configuration of an optical component according to an embodiment of the present invention. In the same figure, (a) shows a cross section including the optical axis of this optical component 14, and (b) to (d) show cross-sectional refractive index profiles at respective positions in the longitudinal direction.

As shown in (a) of the same figure, the optical component 14 is an optical component of the optical waveguide type produced on the basis of silica-based optical fiber 300 being an optical waveguide, and has a first region 310 and a second region 320 along the longitudinal direction of the optical fiber 300. This optical fiber 300 has a first position 311 at one end and a second position 321 at the other end. A cross-sectional refractive index profile in the first region 310 is of the step index type, and a cladding region 333 of a low refractive index surrounds the periphery of a first core region 331 of a high refractive index ((b) in the same figure). No spliced portion exists between the first region 310 and the second region 320, and the first region 310 and the second region 320 are provided in the so-called optical fiber 300 of one continuous length. Namely, the optical fiber 300 as an optical waveguide is a single optical fiber in which the first region 310 and the second region 320 are formed and in which no spliced portion exists between the first region and the second region, as described above. Therefore, the outside diameter of the first region 310 is equal to the outside diameter of the second region 320.

A cross-sectional refractive index profile in the second region 320 is one in which a second core region 332 is located between the first core region 331 and the cladding region 333 ((c) and (d) in the same figure). The refractive indices of the second core region 332 in the second region 320 continuously vary along the longitudinal direction so that those at positions near the boundary to the first region 310 are approximately equal to that of the cladding region 333 ((c) in the same figure) and so that those at positions near the second position 321 are approximately equal to that of the first core region 331 ((d) in the same figure). The variation of cross-sectional refractive index profiles is also continuous in the vicinity of the boundary between the first region 310 and the second region 320. The terms "continuously vary" and "variation is continuous" may include a constant range without change.

At a predetermined wavelength, this optical component 14 guides light in the single mode in the first region 310 including the first position 311, and in multiple modes at least at the second position 321 in the second region 320. The predetermined wavelength is an operating wavelength of this optical component 14; for example, where the optical component 14 is used in optical communication, the predetermined wavelength is any one of wavelengths in a wavelength band of signal light from the O-band to the U-band.

The first region 310 is not always indispensable and the optical component 14 may consist of only the second region 320 having the second core region 332.

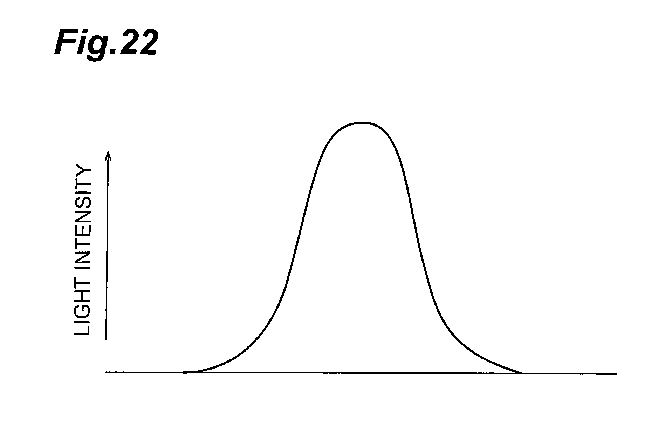

Next, the operation of the optical component 14 according to the present embodiment will be described. At the predetermined wavelength, the optical component guides light in the single mode in the first region 310, and increases the number of modes toward the second position 321 in the second region 320. Therefore, light of the predetermined wavelength injected from the outside into the first position 311 of the optical fiber 300 propagates in the fundamental mode as confined in the core region 331 in the first region 310. A distribution of light intensities of the guided light at this time (a light intensity distribution on a plane perpendicular to the optical axis) can be well approximated by the Gaussian distribution (cf. Fig. 22).

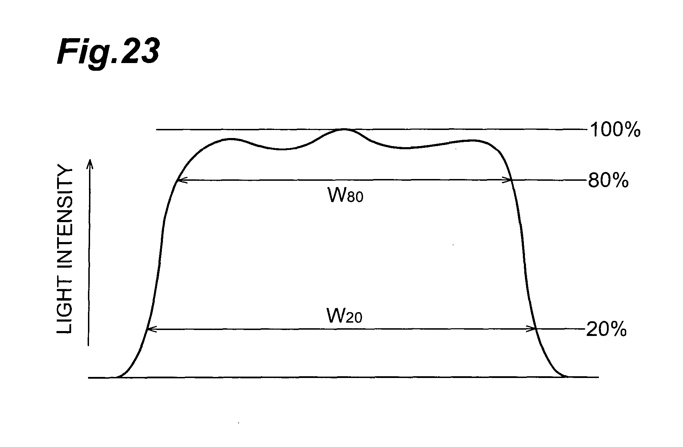

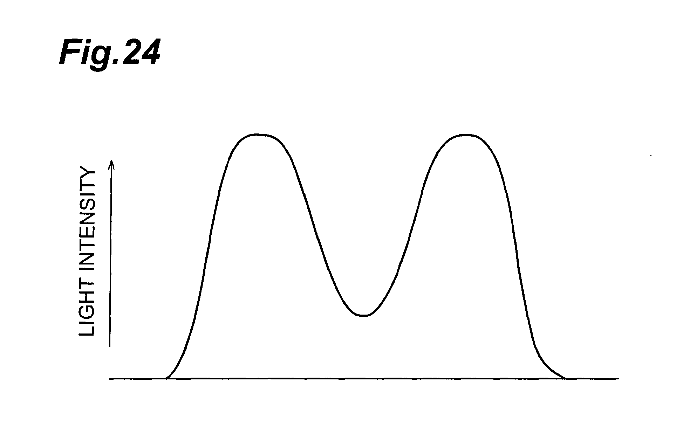

The guided light in the first region 310 soon enters the second region 320 to propagate therein. The light guided in the second region 320 is in the fundamental mode at the beginning, and optical coupling from the fundamental mode to higher-order modes occurs in the region permitting existence of higher-order modes. Immediately before outputted from the second position 321, the fundamental mode and higher-order modes are mixed, and an intensity distribution of light outputted from the second position 321 to the outside is a superposition of light intensity distributions of respective modes (cf. Fig. 23 and Fig. 24).

Fig. 22 is an illustration showing the intensity distribution of the light guided in the first region of the optical component 14 according to an embodiment of the present invention. At the wavelength of the guided light only the fundamental mode can exist in the first region 310 and, as shown in this figure, the intensity distribution of the guided light in the first region 310 can be well approximated by the Gaussian distribution.

Fig. 23 is an illustration showing an example of the intensity distribution of the light outputted from the second position 321 of the optical component 14 according to an embodiment of the present invention. This figure shows the light intensity distribution on one plane perpendicular to the optical axis of the light outputted from the second position 321 of the optical component 14 (the plane will be referred to hereinafter as "measurement plane"). The horizontal axis of the same figure represents positions on a straight line perpendicular to the optical axis on the measurement plane (the straight line will be referred to hereinafter as "measurement line"). The measurement plane may be a plane right close to the second position 321 or may be a plane a predetermined distance apart from the second position 321.

In the example shown in this figure, the intensity distribution of the light outputted from the second position 321 is flat. Preferably, where $W_{80}$ represents a width of a range wherein the light intensity is not less than 80% of the peak intensity and where $W_{20}$ represents a width of a range wherein the light intensity is not less than 20% of the peak intensity, a ratio of these ($W_{20}/W_{80}$) is not more than 1.2. A light intensity distribution satisfying it can be obtained when a ratio of fundamental-mode light and higher-order mode light is set at an appropriate value at the second position 321.

The ratio ($W_{20}/W_{80}$) is preferably not more than 1.2 on a measurement line along a certain direction on the measurement plane (or in a direction within a certain range), and the ratio ($W_{20}/W_{80}$) is most preferably not more than 1.2 on measurement lines along all the directions on the measurement plane. Here the number of modes at the second position 321 and at the predetermined wavelength is preferably not less than 3, in terms of achieving the flat light intensity distribution on the measurement plane.

Fig. 24 is an illustration showing another example of the intensity distribution of the light outputted from the second position of the optical component 14 according to an embodiment of the present invention. This illustration also shows a light intensity distribution on a measurement plane, and the horizontal axis represents positions on a measurement line. In the example shown in this figure, the light intensity is higher in the marginal region than in the central region. The light intensity distribution of this type can be obtained when the ratio of the second-order mode light is set to be large at the second position 321. For example, in a case where a boring process is carried out using the optical component, the light intensity distribution of this type permits effective utilization of optical energy.

Next, an example of the optical component 14 according to an embodiment of the present invention will be described. In the example (simulation example), the outside diameter of the first core region 331 of the optical fiber 300 was 8 $\mu$m, the outside diameter of the second core region 332 100 $\mu$m, and the outside diameter of the cladding region 333 125 $\mu$m. The refractive index $n_1$ of the first core region 331 was set to 1.449, the refractive index $n_0$ of the cladding region 333 to 1.444, and the refractive indices n(z) of the second core region 332 to those expressed by Eqs (1a), (1b) below. In these equations, z represents a variable indicating the longitudinal position, $z_0$ a parameter of length and the value of 4 mm, and $z_1$ a length of the second region 320 and the value of 8 mm. The wavelength was 1.55 $\mu$m.

$$n(z) = n_0 + (n_1 - n_0)f(z) \qquad \cdots (1a)$$

$$f(z) = \frac{1 - \exp(-z/z_0)}{1 - \exp(-z_1/z_0)} \qquad \cdots (1b)$$

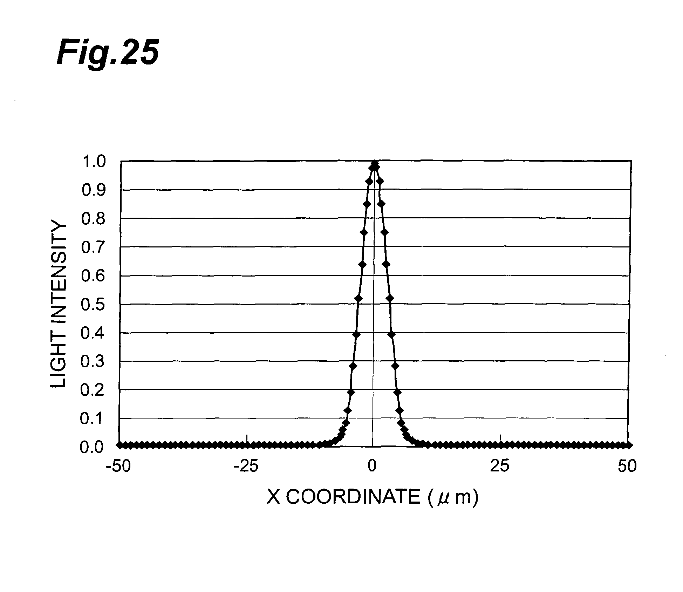

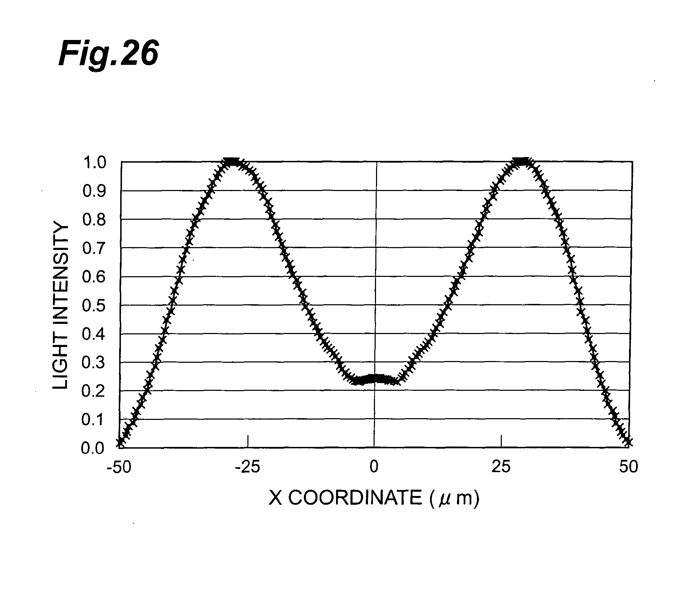

Fig. 25 is an illustration showing an intensity distribution of light guided through the first region 310 of the optical component 14 in the example. Fig. 26 is an illustration showing an intensity distribution of light at the second position 321 of the optical component 14 in the example. The intensity distribution of light guided through the first region 310 can be well approximated by the Gaussian distribution as shown in Fig. 25. In contrast to it, the intensity distribution of light at the second position 321 after guided through the second region 320 has the light intensity greater in the marginal region than in the central region, as shown in Fig. 26. This is because optical coupling from the fundamental mode to the second-order mode occurred during the propagation of the light through the second region 320.

Furthermore, another embodiment of the optical component 14 will be described below. The optical component 14 according to this embodiment is different in the respects described below, from the foregoing optical component 14. Namely, the optical component 14 of this embodiment has a longitudinally constant cross-sectional refractive index profile in the second region 320. The light outputted from the second position 321 can have such an intensity distribution that, where $W_{60}$ represents a width of a range wherein the light intensity is not less than 60% of the peak intensity and $W_{20}$ a width of a range wherein the light intensity is not less than 20% of the peak intensity, a ratio of these ($W_{20}/W_{60}$) is not more than 1.4. Preferably, where $W_{80}$ represents a width of a rang wherein the light intensity is not less than 80% of the peak intensity and $W_{20}$ the width of the range where the light intensity is not less than 20% of the peak intensity, the ratio of these ($W_{20}/W_{80}$) is not more than 1.2.

The optical component 14 of this embodiment has the longitudinally constant cross-sectional refractive index profile in the second region 320, but, since a production method of optical component 14 described later is a method of producing the optical component 14 by projecting the refractive index change inducing light to an optical fiber in which a region to become the second core region is doped with a photosensitive refractive index increasing agent, the variation of cross-sectional refractive index distributions becomes continuous at the boundary between the first region 310 and the second region 320.

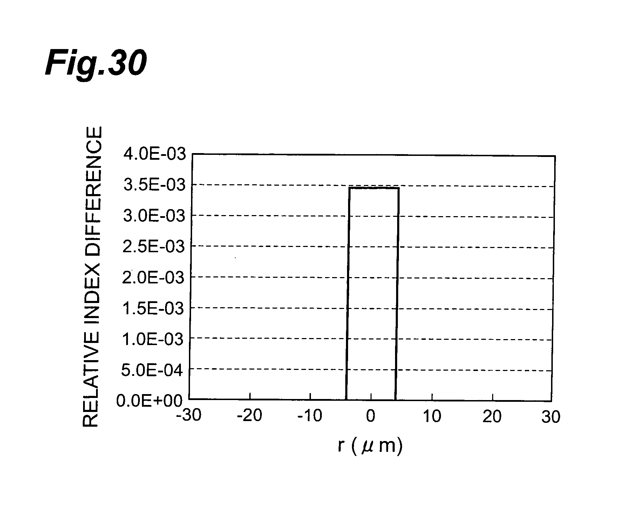

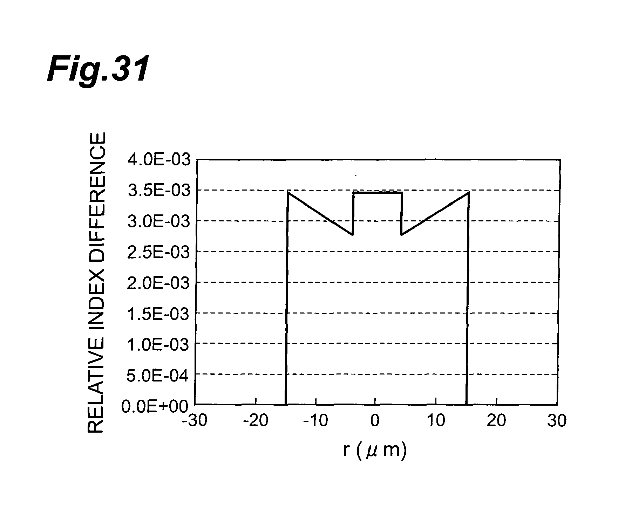

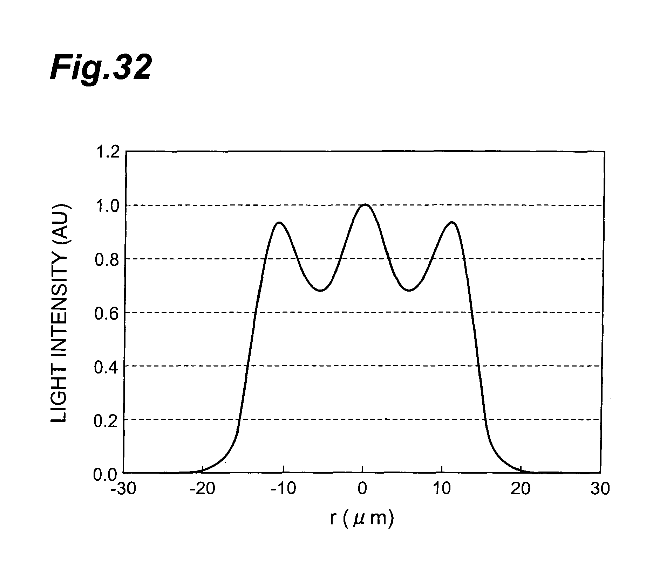

Examples 1 to 3 of this optical component 14 will be described below. Fig. 30 is a diagram showing a cross-sectional refractive index profile at the first position of the optical component in Example 1. Fig. 31 is a diagram showing a cross-sectional refractive index profile at the second position of the optical component in Example 1. Fig. 32 is a diagram showing an intensity distribution of output light from the second position of the optical component in Example 1.

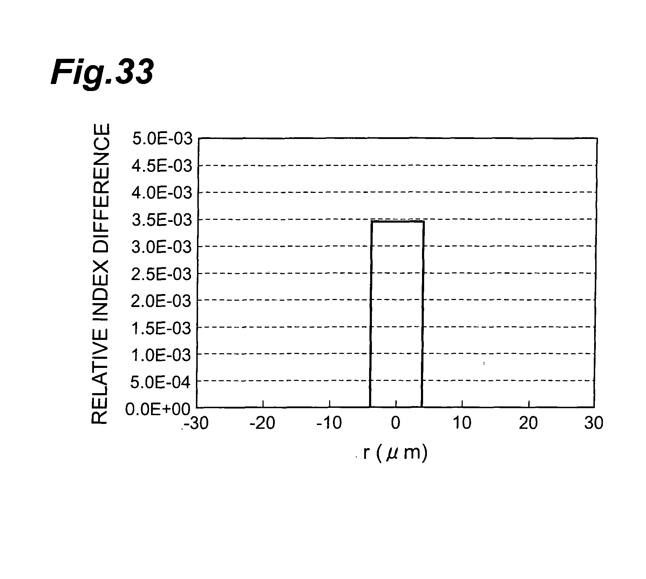

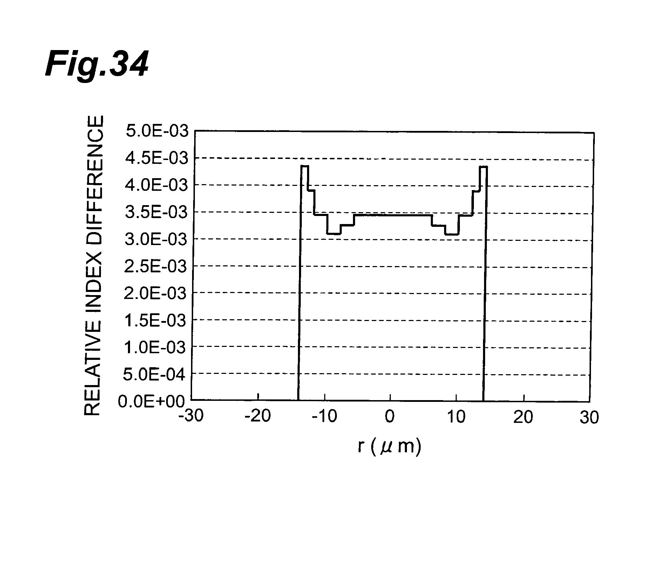

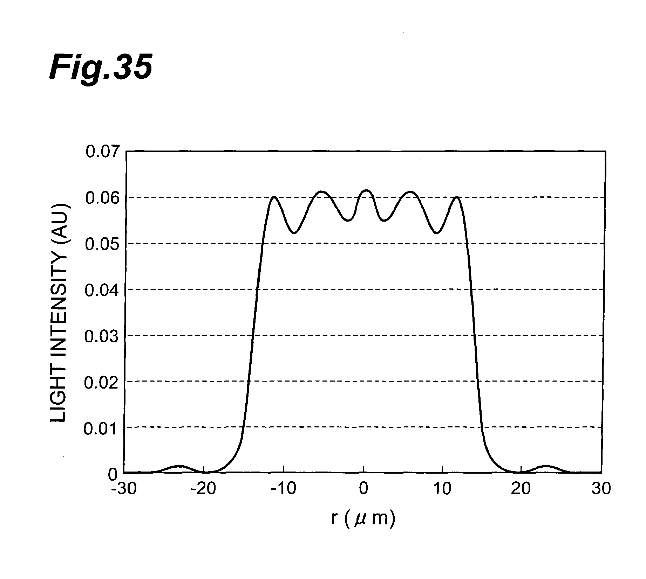

Fig. 33 is a diagram showing a cross-sectional refractive index profile at the first position of the optical component in Example 2. Fig. 34 is a diagram showing a cross-sectional refractive index profile at the second position of the optical component in Example 2. Fig. 35 is a diagram showing an intensity distribution of output light from the second position of the optical component in Example 2.

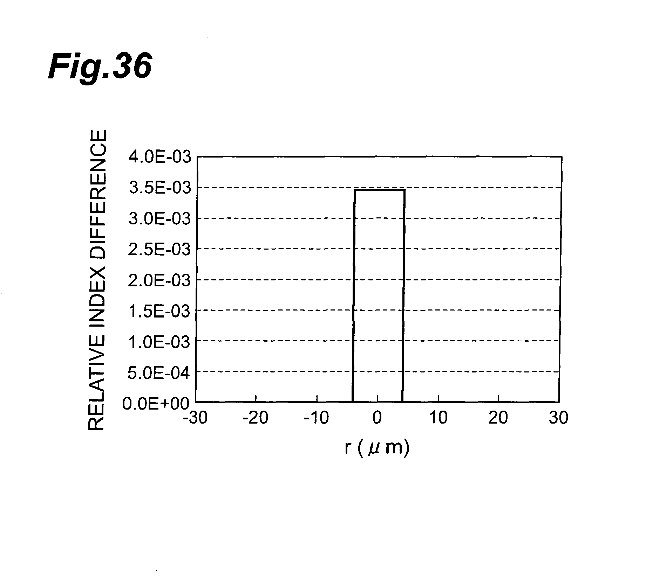

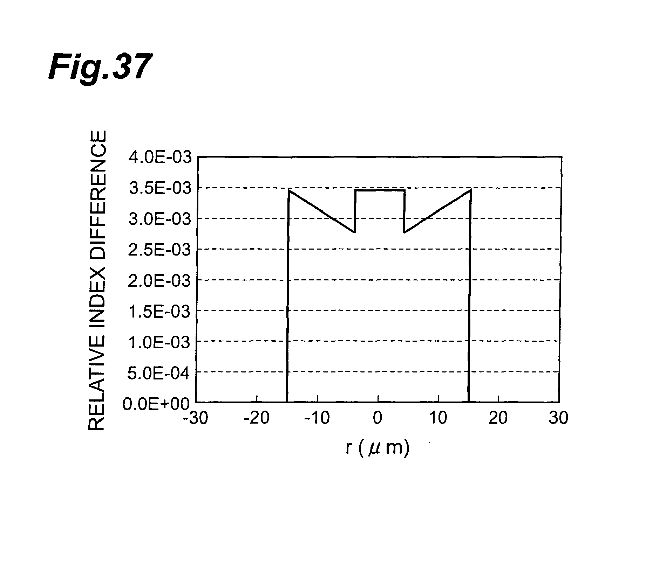

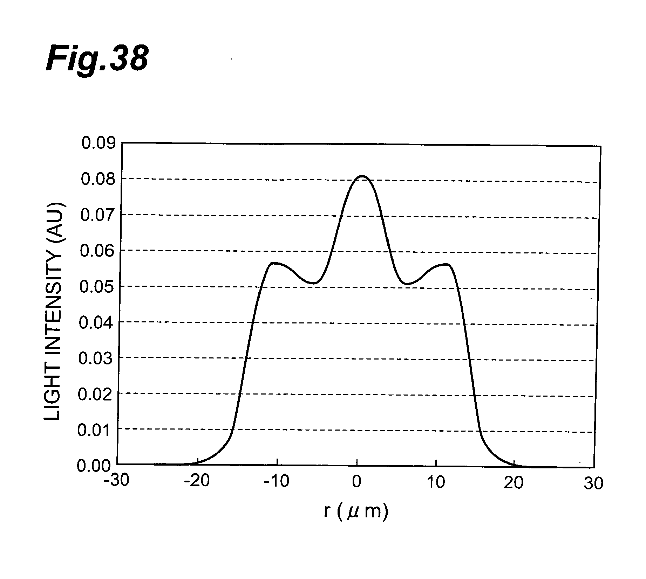

Fig. 36 is a diagram showing a cross-sectional refractive index profile at the first position of the optical component in Example 3. Fig. 37 is a diagram showing a cross-sectional refractive index profile at the second position of the optical component in Example 3. Fig. 38 is a diagram showing an intensity distribution of output light from the second position of the optical component in Example 3.

Figs. 32, 35, and 38 show the light intensity distributions on one plane normal to the optical axis of the light outputted from the second position 321 (the plane will be referred to hereinafter as "measurement plane"). In Figs. 30, 31, 33, 34, 36, and 37, the horizontal axis represents the length r in the radial direction from the center axis of the optical fiber 300, and the vertical axis the relative index difference. In Figs. 32, 35, and 38, the horizontal axis represents the length r from the optical axis on the measurement plane, and the vertical axis the light intensity.

The optical component of Example 1 is an optical component in which the diameter of the optical fiber 300, the diameter of the first core region 331, the diameter of the second core region 332, the relative index difference (peak value) of the first core region, the relative index difference (peak value) of the second core region, and the length of the second region 320 are 125 $\mu$m, 8 $\mu$m, 29.8 $\mu$m, 0.346%, 0.345%, and 1.37 mm, respectively, and which has the cross-sectional refractive index profiles shown in Fig. 30 and Fig. 31.

A simulation was carried out for this optical component of Example 1, and the light output with the intensity distribution shown in Fig. 32 was obtained thereby. In Example 1, $W_{20}$ = 15.55 $\mu$m, $W_{60}$ = 13.55 $\mu$m, and $W_{20}/W_{60}$ = 1.147601, and the light intensity distribution was one in which the intensity was high in the marginal region in the radial direction, as shown in Fig. 32.

The optical component of Example 2 is an optical component in which the diameter of the optical fiber 300, the diameter of the first core region 331, the diameter of the second core region 332, the relative index difference (peak value) of the first core region, the relative index difference (peak value) of the second core region, and the length of the second region 320 were 125 $\mu$m, 8 $\mu$m, 27.8 $\mu$m, 0.346%, 0.436%, and 1.2 mm, respectively, and which has the cross-sectional refractive index profiles shown in Figs. 33 and 34.

A simulation was carried out for this optical component of Example 2, and the light output with the intensity distribution shown in Fig. 35 was obtained thereby. In Example 2, $W_{20}$ = 14.95 $\mu$m, $W_{80}$ = 12.95 $\mu$m, and $W_{20}/W_{80}$ = 1.15444, and the light output with the flat intensity distribution was obtained as shown in Fig. 35.

The optical component of Example 3 is an optical component in which the diameter of the optical fiber 300, the diameter of the first core region 331, the diameter of the second core region 332, the relative index difference (peak value) of the first core region, the relative index difference (peak value) of the second core region, and the length of the second region 320 are 125 $\mu$m, 8 $\mu$m, 29.8 $\mu$m, 0.346%, 0.345%, and 1.35 mm, respectively, and which has the cross-sectional refractive index profiles shown in Figs. 36 and 37.

A simulation was carried out for this Example 3, and the light output with the intensity distribution shown in Fig. 38 was obtained thereby. In Example 3, $W_{20}$ = 15.05 $\mu$m, $W_{60}$ = 12.45 $\mu$m, and $W_{20}/W_{60}$ = 1.208835, and the light output with the relatively flat intensity distribution as shown in Fig. 38 was obtained, as compared with the light output from ordinary optical fibers with the intensity distribution of the Gaussian distribution.

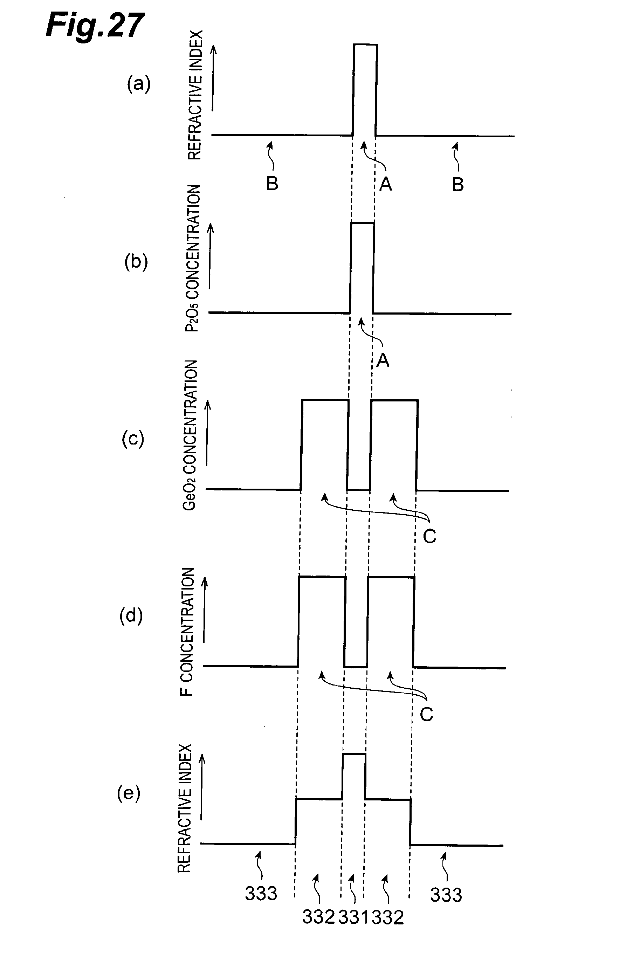

Next, a method of producing the optical component 14 according to an embodiment of the present invention will be described. Fig. 27 is an illustration to illustrate an optical component production method according to the present embodiment. In the same figure, (a) shows a cross-sectional refractive index profile of an initial optical fiber, (b) a $P_2O_5$ dopant concentration profile, (c) a $GeO_2$ dopant concentration profile, (d) an F dopant concentration profile, and (e) a cross-sectional refractive index profile in the second region 320 after exposure to the refractive index change inducing light. These are profiles in the radial direction.

An optical fiber is prepared at the beginning. The optical fiber prepared herein is one having the cross-sectional refractive index profile of the step index type similar to that of the first region 310 of the optical component 14 to be produced, and having a core region A and a cladding region B consisting primarily of silica glass ((a) in the same figure). The core region A is uniformly doped, for example, with $P_2O_5$ as a refractive index increasing agent ((b) in the same figure). A portion C (a portion to become the second core region 332 later) of the cladding region B close to the core region A is doped with $GeO_2$ as a photosensitive agent and has photosensitivity to the refractive index change inducing light ((c) in the same figure). The refractive index change inducing light is light of a wavelength capable of inducing a change of refractive index of silica glass doped with $GeO_2$ as a photosensitive agent, and light suitably applicable is, for example, ultraviolet laser light of the wavelength of 248 nm emitted from a KrF excimer laser source.

Since $GeO_2$ is not only a photosensitive agent but also a refractive index increasing agent, the portion C doped with $GeO_2$ in the cladding region B is also doped with element F as a refractive index decreasing agent ((d) in the same figure). By setting the concentration profiles of the respective dopants in this manner, the cross-sectional refractive index profile as shown in (a) of the same figure and the photosensitive profile in the shape similar to the profile shown in (c) of the same figure are realized.

A partial region (a region to become the second region 320 of the optical component 14) along the longitudinal direction of the optical fiber prepared in this way is exposed to the refractive index change inducing light. This exposure increases the refractive index of the portion doped with $GeO_2$ in the cladding region B in the exposed region, and the refractive index increased portion becomes the second core region 332, thus achieving the cross-sectional refractive index profile as shown in (e) of the same figure. At this time, irradiation quantities of the refractive index change inducing light continuously vary in the longitudinal direction so that they are low at positions near the boundary to the first region 310 and high at positions near the second position 321. The irradiation quantity of the refractive index change inducing light in the vicinity of the second position 321 is determined to be a quantity of light enough to increase the refractive index of the second core region 332 to achievement of the cross-sectional refractive index profile realizing multiple modes at the second position 321.

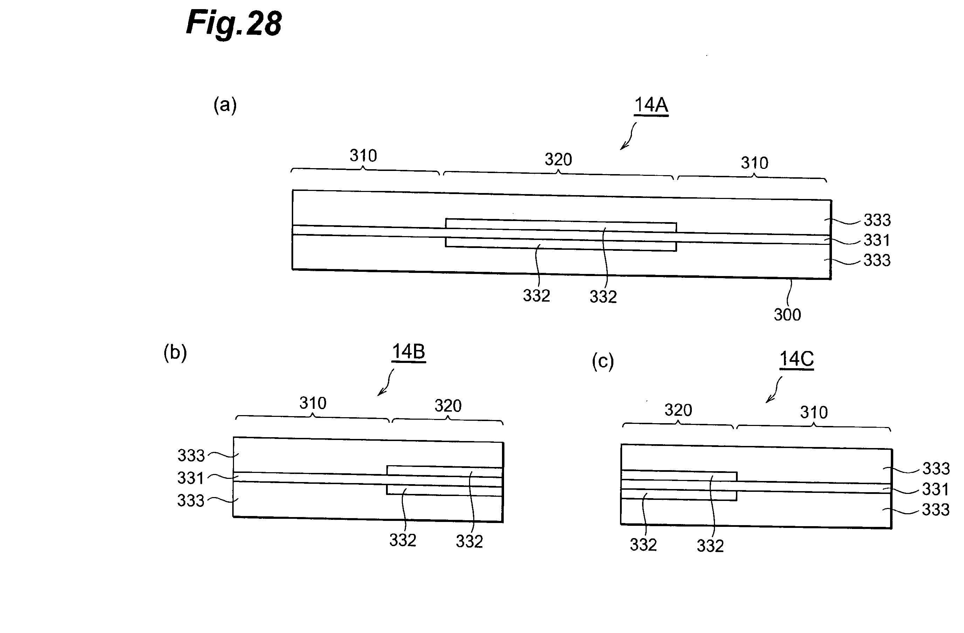

Fig. 28 is an illustration to illustrate an optical component production method according to an embodiment of the present invention. This illustration shows cross sections including the optical axis of respective optical components 14A to 14C. Each of the optical component 14B shown in (b) of the same figure and the optical component 14C shown in (c) of the same figure has a configuration similar to that of the optical component 14 shown in Fig. 21. The optical component 14A shown in (a) of the same figure can be called a semi-finished product with respect to the optical components 14B, 14C, and an intermediate region thereof along the longitudinal direction is exposed to the refractive index change inducing light to become the second region 320. The optical component 14A is cut at a certain position in this second region 320 to be divided into two, the optical component 14B and optical component 14C. When the region exposed to the refractive index change inducing light includes one end of the optical fiber, the optical component 14 as shown in Fig. 21 can be obtained immediately after the exposure.

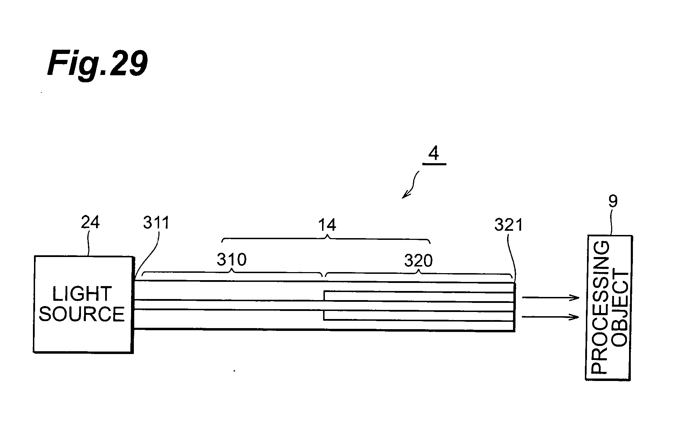

Next, an optical system 4 according to an embodiment of the present invention will be described. Fig. 29 is a configuration diagram of optical system 4 according to the present embodiment. The optical system 4 shown in this figure is a laser processing system for processing a processing object 9, and has the optical component 14 of the present embodiment described above, and a laser source 24. The laser source 24 is a source for emitting laser light to be projected onto the processing object 9. The optical component 14 receives input laser light emitted from the laser source 24, at the first position 311 at one end, guides the input laser light sequentially through the first region 310 and through the second region 320, and thereafter outputs the laser light from the second position 321 at the other end to the outside, thereby projecting the output laser light onto the processing object 9.

A lens system for condensing the light emitted from the laser source 24 and for injecting the condensed light into the first position 311 of the optical component 14 may be provided between the laser source 24 and the first position 311 of the optical component 14. A lens system for condensing the light outputted from the second position 321 of the optical component 14 and for projecting the condensed light onto the processing object 9 may be provided between the second position 321 of the optical component 14 and the processing object 9.

The intensity distribution of the light outputted from the second position 321 of the optical component 14 is properly set depending upon a processing purpose or the like; it may be flat as shown in Fig. 23; or the light intensity may be greater in the marginal region than in the central region as shown in Fig. 24.

This optical system 4 is a system for guiding the light emitted from the laser source 24, from the first position 311 to the second position 321 of the optical component 14 and for outputting the light with a modified intensity distribution from the second position 321 of the optical component 14 to the outside. However, the optical component 14 may guide the light from the second position 321 to the first position 311 and, in this case, the light emitted from the light source 24 can be readily injected into the second position 321 of the optical component 14.

Industrial Applicability

According to the present invention, an optical component which can output light in a light intensity distribution different from that of incident light and of which efficiency of input/output of light is high is provided. In addition, a method of producing an optical component, which is suitable for producing the optical component, is provided. Furthermore, an optical system incorporating the optical component is provided.

**Claims**

1. An optical component comprising a single optical waveguide having a first region and a second region which are arranged in order along a longitudinal direction thereof,
   wherein, in the second region, cross-sectional refractive index profiles vary along the longitudinal direction.

2. The optical component according to Claim 1, wherein the optical waveguide is an optical fiber, and
   an outside diameter of the first region is equal to an outside diameter of the second region.

3. The optical component according to Claim 1 or 2, wherein the optical waveguide has a first position and a second position along the longitudinal direction thereof,
   cross-sectional refractive index profiles vary along the longitudinal direction between the first position and the second position, and
   at a predetermined wavelength to become a single mode at the first position, an overlap rate between a field distribution of light having propagated from the first position and having arrived at the second position, and the Gaussian distribution is not less than 90%.

4. The optical component according to Claim 1 or 2, wherein the optical waveguide has a first position and a second position along the longitudinal direction thereof,
   cross-sectional refractive index profiles vary along the longitudinal direction between the first position and the second position, and
   at a predetermined wavelength to become a single mode at the first position, an overlap rate between a field distribution of light and a field distribution of fundamental-mode light having propagated from the first position and having arrived at the second position is not less than 90%.

5. The optical component according to Claim 3 or 4, wherein, at each position along the longitudinal direction between the first position and the second position and at the predetermined wavelength, an overlap rate between a field distribution of light having propagated from the first position and having arrived at the position, and the Gaussian distribution is not less than 90%.

6. The optical component according to Claim 3 or 4, wherein, at each position along the longitudinal direction between the first position and the second position and at the predetermined wavelength, an overlap rate between a field distribution of fundamental-mode light and the Gaussian distribution is not less than 90%.

7. The optical component according to Claim 3 or 4, wherein, at each position along the longitudinal direction between the first position and the second and at the predetermined wavelength, an overlap rate between a field distribution of light having propagated from the first position and having arrived at the position, and a field distribution of fundamental-mode light is not less than 90%.

8. The optical component according to Claim 3 or 4, wherein at the predetermined wavelength a mode field diameter at the second position is not less than 10% different from a mode field diameter at the first position.

9. The optical component according to Claim 3 or 4, wherein V parameters vary along the longitudinal direction between the first position and the second position.

10. The optical component according to Claim 3 or 4, wherein a V parameter at the second position is not less than 2.4.

11. The optical component according to Claim 3 or 4, wherein, at each position along the longitudinal direction between the first position and the second position and at the predetermined wavelength, a change rate of a field distribution of fundamental-mode light is not more than 0.1/mm.

12. The optical component according to Claim 3 or 4, wherein the variation of the cross-sectional refractive index profiles is continuous along the longitudinal direction between the first position and the second position.

13. The optical component according to Claim 3 or 4, wherein the first position is one end of the optical waveguide and the second position is another end of the optical waveguide.

14. The optical component according to Claim 1 or 2, wherein a mode field diameter in the second region is larger than a mode field diameter in the first region, and
the second region has a cross-sectional refractive index profile capable of substantializing a graded index lens.

15. The optical component according to Claim 14, wherein a cross-sectional refractive index profile in the first region is of a step index type.

16. The optical component according to Claim 14, wherein the cross-sectional refractive index profile in the second region is of a graded index type.

17. The optical component according to Claim 14, wherein the second region includes one end of the optical waveguide.

18. The optical component according to Claim 14, wherein the first region permits transmission in a single mode.

19. The optical component according to Claim 1 or 2, wherein the optical waveguide has a first position and a second position along a longitudinal direction thereof, and
at a predetermined wavelength to become a single mode at the first position, light propagates in multiple modes at the second position.

20. The optical component according to Claim 19, wherein at the predetermined wavelength the number of modes at the second position is not less than 3.

21. The optical component according to Claim 19, wherein a variation of cross-sectional refractive index profiles along the longitudinal direction of the optical waveguide is continuous between the first position and the second position.

22. The optical component according to Claim 19, wherein the second position is one end of the optical waveguide.

23. The optical component according to Claim 22, wherein for a light intensity distribution on a plane perpendicular to the optical axis, of light of the predetermined wavelength having propagated through the optical waveguide and then having been outputted from the one end to the outside, where $W_{60}$ designates a width of a range wherein light intensities are not less than 60% of a peak intensity and $W_{20}$ designates a width of a range wherein light intensities are not less than 20% of the peak intensity, a ratio of the widths ($W_{20}/W_{60}$) is not more than 1.4.

24. The optical component according to Claim 23, wherein for a light intensity distribution on a plane perpendicular to the optical axis, of the light of the predetermined wavelength having propagated through the optical waveguide and then having been outputted from the one end to the outside, where $W_{80}$ designates a width of a range wherein light intensities are not less than 80% of the peak intensity and $W_{20}$ designates the width of the range wherein light intensities are not less than 20% of the peak intensity, a ratio of the widths ($W_{20}/W_{80}$) is not more than 1.2.

25. The optical component according to Claim 22, wherein for a light intensity distribution on a plane perpendicular to the optical axis, of light of the predetermined wavelength having propagated through the optical waveguide and then having been outputted from the one end to the outside, a light intensity is greater in a marginal region than in a central region.

26. An optical component production method comprising steps of:

preparing a single optical waveguide having a core region and a cladding region, the cladding region having photosensitivity to refractive index change inducing light;

exposing a partial region along a longitudinal direction of the optical waveguide to the refractive index change inducing light; and

changing cross-sectional refractive index profiles along the longitudinal direction in the exposed region of the refractive index change inducing light in the optical waveguide.

27. The optical component production method according to Claim 26, wherein the optical waveguide is an optical fiber.

28. The optical component production method according to Claim 26 or 27, wherein, at a predetermined wavelength to become a single mode in a non-exposed region, a mode field diameter at a predetermined position in the exposed region is changed.

29. The optical component production method according to Claim 28, wherein a change of irradiation quantities of the refractive index change inducing light along the longitudinal direction of the optical waveguide is continuous.

30. The optical component production method according to Claim 28, wherein the predetermined position is one end of the optical waveguide.

31. The optical component production method according to Claim 28, wherein the exposed region is an intermediate region along the longitudinal direction of the optical waveguide, and the optical waveguide is cut at the predetermined position.

32. The optical component production method according to Claim 26 or 27, wherein the cladding region has photosensitivity to refractive index change inducing light in a region adjacent to the core region, and
a cross-sectional refractive index profile capable of substantializing a graded index lens is formed in the exposed region.

33. The optical component production method according to Claim 32, wherein the cross-sectional refractive index profile of the optical waveguide prepared is of the step index type.

34. The optical component production method according to Claim 32, wherein the cross-sectional refractive index profile in the exposed region is of the graded index type.

35. The optical component production method according to Claim 32, wherein the exposed region includes one end of the optical waveguide.

36. The optical component production method according to Claim 32, wherein the exposed region is an intermediate region along the longitudinal direction of the optical waveguide, and the optical waveguide is cut at a position within the exposed region.

37. The optical component production method according to Claim 26 or 27, wherein light of a predetermined wavelength to become a single mode in a non-exposed region propagates in multiple modes at any position in the exposed region.

38. The optical component production method according to Claim 37, wherein a change of irradiation quantities of the refractive index change inducing light along the longitudinal direction of the optical waveguide is continuous.

39. The optical component production method according to Claim 37, wherein the predetermined position is one end of the optical waveguide.

40. The optical component production method according to Claim 37, wherein the exposed region is an intermediate region along the longitudinal direction of the optical waveguide, and the optical waveguide is cut at the predetermined position.

41. An optical system comprising the optical component defined in any one of claims 1 to 25.

42. An optical system comprising:

a light source for emitting light; and

the optical component defined in Claim 17, for receiving the light emitted from the light source, at an input end, for guiding the light, and for outputting the light from an output end.

43. The optical system according to Claim 42, wherein the optical component guides the light from the first region to the second region.

44. The optical system according to Claim 42, wherein the optical component guides the light from the second region to the first region.

45. An optical system comprising:

a light source for emitting light; and

the optical component defined in Claim 22, for receiving the light emitted from the light source, at an input end, for guiding the light, and for outputting the light from an output end.

46. The optical system according to Claim 45, wherein the optical component guides the light from the first position to the second position.

47. The optical system according to Claim 45, wherein the optical component guides the light from the second position to the first position.

# Fig.1

# Fig.2

## Fig.3

# *Fig.4*

## *Fig.5*

## Fig.6

## Fig.7

# Fig.8

(a)

REFRACTIVE INDEX

B    A    B

(b)

P₂O₅ CONCENTRATION

A

(c)

GeO₂ CONCENTRATION

C

(d)

F CONCENTRATION

C

(e)

REFRACTIVE INDEX

133    132 131 132    133

**Fig.9**

(a)                                                    10A

(b)                10B                              (c)              10C

EP 1 659 429 A1

**Fig.10**

Fig.11

EP 1 659 429 A1

# Fig.12

(a)

(b)

(c)

EP 1 659 429 A1

# Fig.13

*Fig.14*

# Fig.15

(a)

(b)

(c)

(d)

Fig.16

# Fig.17

(a)

F CONCENTRATION

RADIAL DIRECTION

(b)

Ge CONCENTRATION

RADIAL DIRECTION

(c)

P CONCENTRATION

RADIAL DIRECTION

(d)

REFRACTIVE INDEX
(BEFORE EXPOSURE TO UV)

RADIAL DIRECTION

(e)

REFRACTIVE INDEX
(AFTER EXPOSURE TO UV)

RADIAL DIRECTION

*Fig.18*

(a)

F CONCENTRATION

RADIAL DIRECTION

(b)

Ge CONCENTRATION

RADIAL DIRECTION

(c)

P CONCENTRATION

RADIAL DIRECTION

(d)

REFRACTIVE INDEX
(BEFORE EXPOSURE TO UV)

RADIAL DIRECTION

(e)

REFRACTIVE INDEX
(AFTER EXPOSURE TO UV)

RADIAL DIRECTION

## Fig.19

(a)

<u>12A</u>

210       220       210

212

211

212

212

211

212

100

(b)

<u>12B</u>

210    220

212

211

212

(c)

<u>12C</u>

220    210

212

211

212

EP 1 659 429 A1

# Fig.20

*Fig.21*

(a)

14

311  310  320  321

333
332
331
332
333

300

(b)  (c)  (d)

REFRACTIVE INDEX

EP 1 659 429 A1

*Fig.22*

## Fig.23

# Fig.24

*Fig.25*

# Fig.26

# Fig.27

(a)

REFRACTIVE INDEX

B     A     B

(b)

P₂O₅ CONCENTRATION

A

(c)

GeO₂ CONCENTRATION

C

(d)

F CONCENTRATION

C

(e)

REFRACTIVE INDEX

333       333

332 331 332

Fig.28

(a)

14A

333
331
333

300

310
320
310

332
332

(b)

14B

333
331
333

320
310

332
332

(c)

14C

333
331
333

310
320

332
332

# Fig.29

## Fig.30

## *Fig.31*

# Fig.32

# *Fig.33*

## Fig.34

# *Fig.35*

## Fig.36

## Fig.37

*Fig.38*

## INTERNATIONAL SEARCH REPORT

| | International application No. |
|---|---|
| | PCT/JP2004/012401 |

**A. CLASSIFICATION OF SUBJECT MATTER**
Int.Cl⁷ G02B6/10, G02B6/24, G02B6/26

According to International Patent Classification (IPC) or to both national classification and IPC

**B. FIELDS SEARCHED**

Minimum documentation searched (classification system followed by classification symbols)
Int.Cl⁷ G02B6/10, G02B6/24, G02B6/26

Documentation searched other than minimum documentation to the extent that such documents are included in the fields searched
Jitsuyo Shinan Koho          1922-1996    Toroku Jitsuyo Shinan Koho    1994-2004
Kokai Jitsuyo Shinan Koho    1971-2004    Jitsuyo Shinan Toroku Koho    1996-2004

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2000-356723 A  (Fujikura Ltd.), | 1-22,41-47 |
| Y | 26 December, 2000 (26.12.00), | 23-40 |
| | Full text; all drawings (particularly, Claims; | |
| | Par. No. [0021]; Figs. 1, 2) | |
| | (Family: none) | |
| | | |
| X | JP 9-236721 A  (Nippon Telegraph And | 1-10,13,15, |
| | Telephone Corp.), | 17-20,22, |
| | 09 September, 1997 (09.09.97), | 41-47 |
| Y | Full text; all drawings (particularly, Par. | 11,12,14,16, |
| | Nos. [0003], [0024]; Figs. 1, 3) | 21,23-40 |
| | (Family: none) | |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 24 November, 2004 (24.11.04) | 14 December, 2004 (14.12.04) |

| Name and mailing address of the ISA/ | Authorized officer |
|---|---|
| Japanese Patent Office | |
| Facsimile No. | Telephone No. |

Form PCT/ISA/210 (second sheet) (January 2004)

**INTERNATIONAL SEARCH REPORT**

| International application No. |
|---|
| PCT/JP2004/012401 |

C (Continuation). DOCUMENTS CONSIDERED TO BE RELEVANT

| Category* | Citation of document, with indication, where appropriate, of the relevant passages | Relevant to claim No. |
|---|---|---|
| X<br><br>Y | JP 5-224060 A (Sumitomo Electric Industries, Ltd., Nippon Telegraph And Telephone Corp.), 03 September, 1993 (03.09.93), Full text; all drawings (particularly, Claims 11, 12; Par. No. [0002]; Fig. 7) & EP 585533 A1    & US 5381503 A & DE 69320119 D | 1-10,13,15, 17-20,22, 41-47<br>11,12,14,16, 21,23-40 |
| X<br><br>Y | JP 8-220361 A (Sumitomo Electric Industries, Ltd.), 30 August, 1996 (30.08.96), Full text; all drawings (particularly, Claims; Par. Nos. [0043], [0044]) (Family: none) | 1-13,15, 17-22,41-47<br>14,16,23-40 |
| X<br><br>Y | JP 11-295536 A (Mitsubishi Electric Corp.), 29 October, 1999 (29.10.99), Full text; all drawings (particularly, Par. Nos. [0006], [0051]; Figs. 1, 12) (Family: none) | 1-10,13,15, 17-20,22, 41-47<br>11,12,14,16, 21,23-40 |
| X<br><br>Y | JP 8-43650 A (Sumitomo Electric Industries, Ltd.), 16 February, 1996 (16.02.96), Full text; all drawings (particularly, Par. Nos. [0031] to [0033]) (Family: none) | 1-10,15, 18-20,26-28, 33,37<br>11-14,16,17, 21-25,29-32, 34-36,38-47 |
| X<br><br>Y | JP 9-113729 A (Fujikura Ltd.), 02 May 1997 (02.05.97), Full text; all drawings (particularly, Par. Nos. [0033], [0034]; Fig. 2) & EP 770890 A1    & US 5732170 A & DE 69625442 D | 1-13,15, 17-22,41-47<br>14,16,23-40 |
| X<br><br>Y | JP 8-190030 A (The Furukawa Electric Co., Ltd.), 23 July, 1996 (23.07.96), Full text; all drawings (particularly, Par. Nos. [0012], [0013], [0015]; Fig. 1) (Family: none) | 1-13,15, 17-22,41-47<br>14,16,23-40 |
| Y | JP 10-33549 A (Shinji KOKUBUN), 10 February, 1998 (10.02.98), Par. Nos. [0056] to [0060]; Figs. 4, 5 & US 6179830 B1    & DE 19731730 A1 | 23-25 |
| Y | JP 5-88039 A (Fujikura Ltd.), 09 April, 1993 (09.04.93), Par. No. [0007]; Fig. 4 (Family: none) | 23-25 |

Form PCT/ISA/210 (continuation of second sheet) (January 2004)

<table>
<tr><td colspan="2" align="center">**INTERNATIONAL SEARCH REPORT**</td><td>International application No.<br>PCT/JP2004/012401</td></tr>
<tr><td colspan="3">C (Continuation). DOCUMENTS CONSIDERED TO BE RELEVANT</td></tr>
<tr><td>Category*</td><td>Citation of document, with indication, where appropriate, of the relevant passages</td><td>Relevant to claim No.</td></tr>
<tr><td>Y</td><td>JP 5-323143 A (Fujikura Ltd.),<br>07 December, 1993 (07.12.93),<br>Par. No. [0007]; Fig. 3<br>(Family: none)</td><td>23,24</td></tr>
<tr><td>Y</td><td>CD-ROM of the specification and drawings<br>annexed to the request of Japanese Utility<br>Model Application No. 48188/1991(Laid-open<br>No. 2104/1993)<br>(NEC Corp.),<br>14 January, 1993 (14.01.93),<br>Par. No. [0014]; Fig. 3<br>(Family: none)</td><td>25</td></tr>
</table>

Form PCT/ISA/210 (continuation of second sheet) (January 2004)

PCT/JP2004/012401

**Box No. II    Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically: Claims

3. ☐ Claims Nos.:
   because they are dependent claims and are not drafted in accordance with the second and third sentences of Rule 6.4(a).

**Box No. III    Observations where unity of invention is lacking (Continuation of item 3 of first sheet)**

This International Searching Authority found multiple inventions in this international application, as follows:
   For the following reason, this international application includes three inventions that do not comply with the unity of invention.
   Main invention: "Claims 1-22, 26-47"
   Second invention: "Claims 23, 24"  Third invention: "Claim 25"
   In the following, the document cited in the international research report are referred to as Document 1, Document 2...in the order in which they are listed.
   The search has revealed that the optical part (optical fiber) described in Claim 1 is disclosed in Documents 1-8 and, therefore, it is not novel. (continued to extra sheet)

1. ☒ As all required additional search fees were timely paid by the applicant, this international search report covers all searchable claims.

2. ☐ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**        ☐    The additional search fees were accompanied by the applicant's protest.

                    ☒    No protest accompanied the payment of additional search fees.

Form PCT/ISA/210 (continuation of first sheet (2)) (January 2004)

**INTERNATIONAL SEARCH REPORT**

International application No.

PCT/JP2004/012401

Continuation of Box No.III of continuation of first sheet(2)

Claims 23, 24 have a technical feature relating to a ratio between the high peak intensity region and the low peak intensity region of light intensity distribution.

Claim 25 has a technical feature that the light intensity is higher than in the periphery than in the middle.

Form PCT/ISA/210 (extra sheet) (January 2004)